# EUROPEAN PATENT SPECIFICATION

(11) **EP 3 527 543 B1**
(45) Date of publication and mention of the grant of the patent: **29.07.2026**
(21) Application number: 17860698.4
(22) Date of filing: 12.10.2017
(51) Int. Cl.: C03C 27/12, B32B 17/10, B60J 1/00, B60J 1/02

(54) **LAMINATED GLASS INTERMEDIATE FILM, AND LAMINATED GLASS**
VERBUNDGLASZWISCHENFOLIE SOWIE VERBUNDGLAS
FILM INTERMÉDIAIRE DE VERRE FEUILLETÉ ET VERRE FEUILLETÉ

(30) Priority: 12.10.2016 JP 2016201031
(43) Date of publication of application: 21.08.2019
(73) Proprietor: Sekisui Chemical Co., Ltd., Osaka-shi, Osaka 530-8565 (JP)
(72) Inventor: OOTA, Yuusuke, Kouka-shi Shiga 528-8585 (JP)
(74) Representative: Ter Meer Steinmeister & Partner
(86) International application number: PCT/JP2017/036926
(87) International publication number: WO 2018/070461

(56) References cited:
- EP-A1- 2 017 237
- EP-A1- 3 176 136
- EP-A1- 3 202 733
- EP-A1- 3 202 737
- EP-A1- 3 392 222
- WO-A1-2016/017825
- WO-A1-2016/052421
- WO-A1-2016/052421
- WO-A1-2016/052478
- WO-A1-2016/052478
- JP-A- 2008 532 917
- US-A1- 2013 149 503
- SEKISUI CHEMICAL CO., LTD.: "Wedge-shaped interlayer film for HUD", 2009, XP002798793, Retrieved from the Internet <URL:https://www.s-lecfilm.com/eng/product/auto/hud/index.html> [retrieved on 20200421]

## Description

### TECHNICAL FIELD

The present invention relates to an interlayer film for laminated glass which is used for obtaining laminated glass. Moreover, the present invention relates to laminated glass prepared with the interlayer film for laminated glass.

### BACKGROUND ART

Since laminated glass generates only a small amount of scattering glass fragments even when subjected to external impact and broken, laminated glass is excellent in safety. As such, the laminated glass is widely used for automobiles, railway vehicles, aircraft, ships, buildings and the like. The laminated glass is produced by sandwiching an interlayer film for laminated glass between a pair of glass plates.

As the laminated glass used for automobiles, a head-up display (HUD) has been known. In the HUD, on the windshield of an automobile, measured information such as the speed which is traveling data of the automobile and the like can be displayed.

In the HUD, there is a problem that the measured information displayed on the windshield is doubly observed.

As laminated glass capable of suppressing double images, the following Patent Document 1 discloses a sheet of laminated glass in which a wedge-shaped interlayer film having a prescribed wedge angle is sandwiched between a pair of glass plates. In such a sheet of laminated glass, by the adjustment of the wedge angle of the interlayer film, a display of measured information reflected by one glass plate and a display of measured information reflected by the other glass plate can be focused into one point to make an image in the visual field of a driver. For that reason, the display of measured information is hard to be observed doubly and the visibility of a driver is hardly hindered.

### Related Art Document

### Patent Document

Patent Document 1: JP H4-502525 T
EP 2 017 237 is directed to an interlayer film for a laminated glass, which comprises at least a pair of protection layers and a sound-insulating layer sandwiched between the pair of the protection layers, and which has a wedge shape as a cross-sectional shape, a wedge angle of 0.1 to 0.7 mrad, the maximum thickness of 2000 µm or thinner, and the minimum thickness of 400 µm or thicker, the minimum thickness of the sound-insulating layer being 20 µm or thicker.
US 2013/149503 provides an intermediate film for laminated glass comprising a first end that is thinner than a second end, and in the intermediate film for laminated glass, a thin region has a moisture content higher than a moisture content of the thick region; and a laminated glass includes a first component for laminated glass, a second component for laminated glass, and an intermediate film sandwiched between the first component for laminated glass and the second component for laminated glass.

### SUMMARY OF THE INVENTION

### PROBLEMS TO BE SOLVED BY THE INVENTION

In order to impart a function such as sound insulating properties to the interlayer film, for example, a multilayer interlayer film in which an interlayer film having sound insulating properties is sandwiched between normal interlayer films can be formed. In laminated glass prepared with a conventional multilayer wedge-like interlayer film, linear or dot-like uneven appearance is sometimes observed when light comes on the laminated glass. Such uneven appearance is also referred to as "distortion".

The present invention aims at providing an interlayer film for laminated glass capable of suppressing double images in the laminated glass, and capable of making uneven appearance difficult to be seen when light comes on the laminated glass. Moreover, the present invention also aims at providing laminated glass prepared with the above-mentioned interlayer film for laminated glass.

The present invention specifically aims at providing an interlayer film for laminated glass capable of suppressing double images in the laminated glass, capable of making uneven appearance difficult to be seen when light comes on the laminated glass, and further having excellent sound insulating properties. Moreover, the present invention also aims at providing laminated glass prepared with the above-mentioned interlayer film for laminated glass.

### MEANS FOR SOLVING THE PROBLEMS

According to a broad aspect of the present invention, there is provided an interlayer film for laminated glass (in the present specification, sometimes abbreviated as "interlayer film") that is an interlayer film for use in laminated glass, which is defined in appended claim 1.

Specific aspects of the interlayer film according to the present invention are defined in appended claims 2 to 10.

According to a broad aspect of the present invention, there is provided a laminated glass including a first lamination glass member, a second lamination glass member, and the interlayer film for laminated glass described above, the interlayer film for laminated glass being arranged between the first lamination glass member and the second lamination glass member.

### EFFECT OF THE INVENTION

The interlayer film for laminated glass according to the present invention includes a first layer containing a thermoplastic resin and a plasticizer, and a second layer containing a thermoplastic resin and a plasticizer, and the second layer is disposed on a first surface side of the first layer. The interlayer film for laminated glass according to the present invention has one end and the other end being at the opposite side of the one end, and the other end has a thickness that is larger than a thickness of the one end. The interlayer film for laminated glass according to the present invention has a minimum thickness of the first layer of 20 µm or more and a wedge angle of 0.1 mrad or more. In the interlayer film for laminated glass according to the present invention, a ratio of thickness of the first layer at the one end to thickness of the interlayer film at the one end is referred to as a ratio A, and a ratio of thickness of the first layer at the other end to thickness of the interlayer film at the other end is referred to as a ratio B. In the interlayer film for laminated glass according to the present invention, when the wedge angle is 0.1 mrad or more and 0.5 mrad or less, the ratio B is 1.1 times or more and 1.7 times or less the ratio A, and when the wedge angle is more than 0.5 mrad, the ratio B is 0.8 times or more and 1.1 times or less the ratio A. In the interlayer film for laminated glass according to the present invention, a content of the plasticizer in the first layer relative to 100 parts by weight of the thermoplastic resin in the first layer is larger than a content of the plasticizer in the second layer relative to 100 parts by weight of the thermoplastic resin in the second layer. In the interlayer film for laminated glass according to the present invention, since the aforementioned configuration is provided, it is possible to suppress double images in the laminated glass, and to make uneven appearance difficult to be seen when light comes on the laminated glass.

### BRIEF DESCRIPTION OF DRAWINGS

[Fig. 1] Figs. 1(a) and (b) are a sectional view and a front view schematically showing an interlayer film for laminated glass in accordance with a first embodiment of the present invention.
[Fig. 2] Figs. 2(a) and (b) are a sectional view and a front view schematically showing an interlayer film for laminated glass in accordance with a second embodiment of the present invention.
[Fig. 3] Fig. 3 is a sectional view showing an example of laminated glass prepared with the interlayer film for laminated glass shown in Fig. 1.

### MODE(S) FOR CARRYING OUT THE INVENTION

Hereinafter, the details of the present invention will be described.

The interlayer film for laminated glass (in the present specification, sometimes abbreviated as "interlayer film") according to the present invention is used for laminated glass.

The interlayer film according to the present invention has two or more-layer structure. The interlayer film according to the present invention may have a two-layer structure or may have a three or more-layer structure. The interlayer film according to the present invention is a multilayer interlayer film.

The interlayer film according to the present invention includes a first layer, a second layerand a third layer. In the interlayer film according to the present invention, the second layer is disposed on a first surface side of the first layer. The interlayer film according to the present invention includes a third layer, which is disposed on a second surface side of the first layer at the opposite side of the first surface side of the first layer.

In the interlayer film according to the present invention, the first layer contains a thermoplastic resin and a plasticizer, and the second layer contains a thermoplastic resin and a plasticizer. The interlayer film according to the present invention includes a third layer, which contains a thermoplastic resin, and it is preferred that the third layer contain a plasticizer.

The interlayer film according to the present invention has one end and the other end being at the opposite side of the one end. The one end and the other end are end portions of both sides facing each other in the interlayer film. In the interlayer film according to the present invention, the thickness of the other end is larger than the thickness of the one end.

The interlayer film according to the present invention has a minimum thickness of the first layer of 20 µm or more.

The interlayer film according to the present invention has a wedge angle of 0.1 mrad or more.

In the interlayer film according to the present invention, a ratio of thickness (a1) of the first layer at the one end to thickness (a) of the interlayer film at the one end is referred to as a ratio A ((a1)/(a)). The ratio A is an index for the percentage of the thickness occupied by the first layer at the one end of the interlayer film.

In the interlayer film according to the present invention, a ratio of thickness (b1) of the first layer at the other end to thickness (b) of the interlayer film at the other end is referred to as a ratio B ((b1)/(b)). The ratio B is an index for the percentage of the thickness occupied by the first layer at the other end of the interlayer film.

In the interlayer film according to the present invention, when the wedge angle is 0.1 mrad or more and 0.5 mrad or less, the ratio B is 1.1 times or more and 1.7 times or less the ratio A. That is, the value of the ratio B/the ratio A is 1.1 or more and 1.7 or less.

In the interlayer film according to the present invention, when the wedge angle is more than 0.5 mrad or less, the ratio B is 0.8 times or more and 1.1 times or less the ratio A. That is, the value of the ratio B/the ratio A is 0.8 or more and 1.1 or less.

In the interlayer film according to the present invention, a content of the plasticizer in the first layer relative to 100 parts by weight of the thermoplastic resin in the first layer is larger than a content of the plasticizer in the second layer relative to 100 parts by weight of the thermoplastic resin in the second layer.

In a conventional interlayer film, linear or dot-like uneven appearance is sometimes observed when light comes on the laminated glass. Such uneven appearance is also referred to as "distortion".

In the present invention, since the aforementioned configuration is provided, it is possible to suppress double images in the laminated glass, and to make uneven appearance difficult to be seen when light comes on the laminated glass.

In the present invention, generation of double images is suppressed when the display information from the display unit is reflected by the laminated glass. In the present invention, uneven appearance that is also referred to as "distortion" can be suppressed.

In a conventional multilayer interlayer film having a wedge angle of 0.1 mrad or more, uneven appearance is easy to be seen when light comes on the laminated glass. In the interlayer film according to the present invention, it is possible to make uneven appearance sufficiently difficult to be seen when light comes on the laminated glass. In the interlayer film according to the present invention, it is possible to make uneven appearance sufficiently difficult to be seen when light comes on the laminated glass even when the wedge angle is 0.1 mrad or more and 0.5 mrad or less, and it is also possible to make uneven appearance sufficiently difficult to be seen when light comes on the laminated glass even when the wedge angle is more than 0.5 mrad.

In the present invention, since the aforementioned configuration is provided, it is possible to enhance the sound insulating properties. Since a content of the plasticizer in the first layer relative to 100 parts by weight of the thermoplastic resin in the first layer is larger than a content of the plasticizer in the second layer relative to 100 parts by weight of the thermoplastic resin in the second layer, the sound insulating properties are effectively enhanced. In the present invention, it is possible to suppress double images in the laminated glass, and to make uneven appearance difficult to be seen when light comes on the laminated glass in laminated glass having enhanced sound insulating properties.

In a conventional interlayer film having a wedge angle of 0.1 mrad or more and 0.5 mrad or less, uneven appearance tends to be seen more easily when light comes on the laminated glass. In a conventional interlayer film having a wedge angle of 0.1 mrad or more and 0.47 mrad or less, uneven appearance tends to be seen still more easily when light comes on the laminated glass. In the interlayer film according to the present invention, it is possible to make uneven appearance sufficiently difficult to be seen when light comes on the laminated glass even when the wedge angle is 0.1 mrad or more and 0.5 mrad or less, or when the wedge angle is 0.47 mrad or less. In the interlayer film according to the present invention, the wedge angle is 0.1 mrad or more and less than 0.7 mrad.

From the viewpoint of effectively suppressing double images and making uneven appearance difficult to be seen when light comes on the laminated glass, the value of the ratio B/the ratio A is 1.1 timer or more and less than 1.4 or less when the wedge angle is 0.1 mrad or more and 0.5 mrad or less.

From the viewpoint of effectively suppressing double images and making uneven appearance difficult to be seen when light comes on the laminated glass, the value of the ratio B/the ratio A is preferably 1.2 or more, more preferably 1.3 or more when the wedge angle is 0.1 mrad or more and 0.5 mrad or less.

From the viewpoint of effectively suppressing double images and making uneven appearance difficult to be seen when light comes on the laminated glass, the value of the ratio B/the ratio A is preferably 1.0 or less, more preferably 0.95 or less when the wedge angle is more than 0.5 mrad and less than 0.7 mrad.

From the viewpoint of effectively suppressing double images and making uneven appearance difficult to be seen when light comes on the laminated glass, the value of the ratio B/the ratio A is preferably 0.85 or more, more preferably 0.9 or more when the wedge angle is more than 0.5 mrad and less than 0.7 mrad.

The interlayer film according to the present invention is suitably used for laminated glass serving as a head-up display (HUD). It is preferred that the interlayer film according to the present invention be an interlayer film for HUD.

It is preferred that the interlayer film according to the present invention have a region for display corresponding to a display region of HUD. The region for display is a region capable of favorably displaying information. It is preferred that the interlayer film according to the present invention have the region for display in a region from a position of 10 cm from the one end toward the other end to a position of 59.8 cm from the one end toward the other end. The region for display may exist in a part or the whole of the region from a position of 10 cm from the one end toward the other end to a position of 59.8 cm from the one end toward the other end.

From the viewpoint of suppressing the double images effectively, it is preferred that the interlayer film have a portion having a sectional shape of wedge-like shape in the thickness direction in the region between a position of 10 cm toward the other end from the one end and a position of 59.8 cm toward the other end from the one end. The portion having a sectional shape of wedge-like shape in the thickness direction may exist in a part or the whole of the region from a position of 10 cm from the one end toward the other end to a position of 59.8 cm from the one end toward the other end.

The interlayer film according to the present invention may have a shading region. The shading region may be separate from the region for display. The shading region is provided so as to prevent a driver from feeling glare while driving, for example, by sunlight or outdoor lighting. The shading region can be provided so as to impart the heat blocking property. It is preferred that the shading region be located in an edge portion of the interlayer film. It is preferred that the shading region be belt-shaped.

In the shading region, a coloring agent or a filler may be used so as to change the color and the visible light transmittance. The coloring agent or the filler may be contained in a partial region in the thickness direction of the interlayer film or may be contained in the entire region in the thickness direction of the interlayer film.

From the viewpoint of providing better display, and further broadening the field of view, the visible light transmittance of the region for display is preferably 80% or more, more preferably 88% or more, further preferably 90% or more. It is preferred that the visible light transmittance of the region for display be higher than the visible light transmittance of the shading region. The visible light transmittance of the region for display may be lower than the visible light transmittance of the shading region. The visible light transmittance of the region for display is higher than the visible light transmittance of the shading region preferably by 50% or more, more preferably by 60% or more.

When the visible light transmittance varies in the interlayer film of each of the region for display and the shading region, the visible light transmittance is measured at the center position of the region for display and at the center position of the shading region.

The visible light transmittance at a wavelength ranging from 380 to 780nm of the obtained laminated glass can be measured by using a spectrophotometer ("U-4100" available from Hitachi High-Technologies Corporation) in conformity with JIS R3211 (1998). As the glass plate, it is preferred to use clear glass having a thickness of 2 mm.

It is preferred that the region for display have a length direction and a width direction. For excellent versatility of the interlayer film, it is preferred that the width direction of the region for display be the direction connecting the one end and the other end. It is preferred that the region for display be belt-shaped.

It is preferred that the interlayer film has an MD direction and a TD direction. For example, the interlayer film is obtained by melt extrusion molding. The MD direction is a flow direction of an interlayer film at the time of producing the interlayer film. The TD direction is a direction orthogonal to the flow direction of an interlayer film at the time of producing the interlayer film and a direction orthogonal to the thickness direction of the interlayer film. It is preferred that the one end and the other end be located on either side of the TD direction.

From the viewpoint of better display, it is preferred that the interlayer film have a portion with a sectional shape of wedge-like shape in the thickness direction. It is preferred that the sectional shape in the thickness direction of the region for display be a wedge-like shape.

The interlayer film may be wound into a roll shape to form a roll body of the interlayer film. The roll body may be provided with a winding core and the interlayer film. The interlayer film may be wound around an outer periphery of the winding core.

Hereinafter, specific embodiments of the present invention will be described with reference to the drawings.

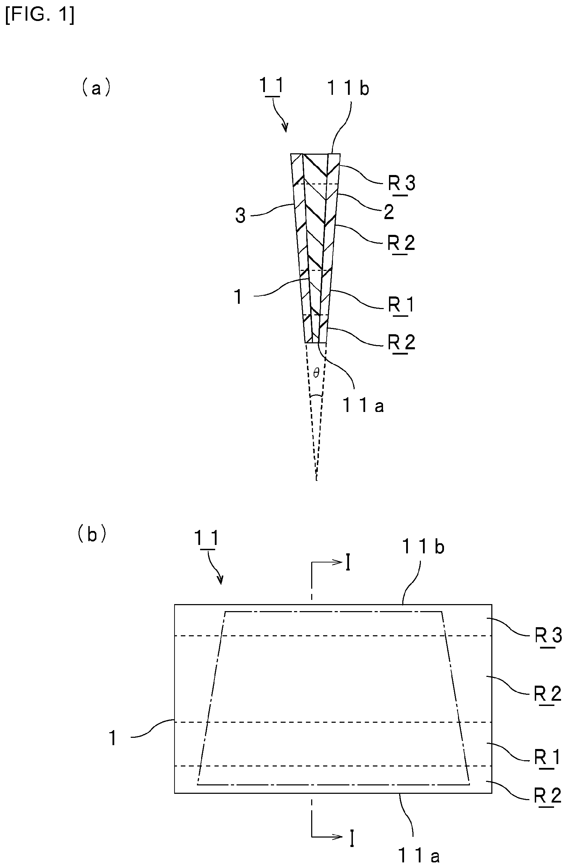

Figs. 1(a) and (b) show a sectional view and a front view schematically showing an interlayer film for laminated glass in accordance with a first embodiment of the present invention. Fig. 1(a) is a sectional view along the line I-I in Fig. 1(b). The size and dimension of the interlayer film in Fig. 1 and later described drawings are appropriately changed from the actual size and shape for convenience of illustration.

In Fig. 1(a), a section in the thickness direction of an interlayer film 11 is shown. In this connection, in Fig. 1(a) and later described drawings, for convenience of illustration, the thicknesses of an interlayer film and respective layers constituting the interlayer film and the wedge angle θ are shown so as to be different from actual thicknesses thereof and an actual wedge angle.

The interlayer film 11 shown in Figs. 1(a) and(b) is provided with a first layer 1 (intermediate layer), a second layer 2 (surface layer), and a third layer 3 (surface layer). The second layer 2 is arranged on a first surface side of the first layer 1 to be layered thereon. The third layer 3 is arranged on a second surface side opposite to the first surface of the first layer 1 to be layered thereon. The first layer 1 is arranged between the second layer 2 and the third layer 3 to be sandwiched therebetween. The interlayer film 11 is used for obtaining laminated glass. The interlayer film 11 is an interlayer film for laminated glass. The interlayer film 11 is a multilayer interlayer film.

The interlayer film 11 has one end 11a and the other end 11b at the opposite side of the one end 11a. The one end 11a and the other end 11b are end parts of both sides facing each other. The sectional shape in the thickness direction of each of the first layer 1, the second layer 2 and the third layer 3 is a wedge-like shape. The thicknesses of the second layer 2 and the third layer 3 are larger in the other end 11b side than in the one end 11a side. Accordingly, the thickness of the other end 11b of the interlayer film 11 is larger than the thickness of the one end 11a thereof. Accordingly, the interlayer film 11 has a region being thin in thickness and a region being thick in thickness.

The interlayer film 11 has a region for display R1 corresponding to a display region of a head-up display. The interlayer film 11 has a peripheral region R2 neighboring the region for display R1. In the present embodiment, the region for display R1 is a region between a position of 10 cm toward the other end 11b from the one end 11a and a position of 59.8 cm toward the other end 11b from the one end 11a.

The interlayer film 11 has a shading region R3 that is separate from the region for display R1. The shading region R3 is located in an edge portion of the interlayer film 11.

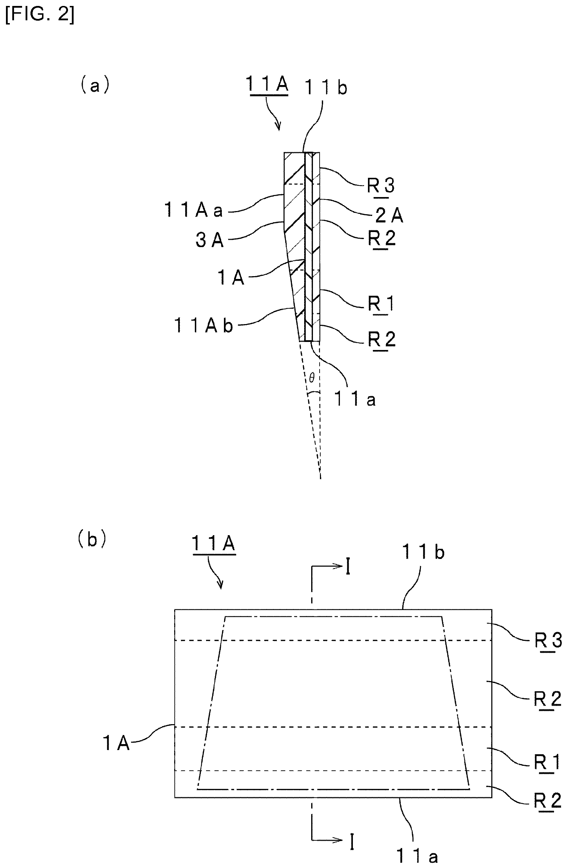

Figs. 2(a) and (b) show a sectional view and a front view schematically showing an interlayer film for laminated glass in accordance with a second embodiment of the present invention. Fig. 2(a) is a sectional view along the line I-I in Fig. 2(b). In Fig. 2(a), a section in the thickness direction of an interlayer film 11A is shown.

The interlayer film 11A shown in Figs. 2(a) and (b) is provided with a first layer 1A (intermediate layer), a second layer 2A (surface layer), and a third layer 3A (surface layer). The second layer 2A is arranged on a first surface side of the first layer 1A to be layered thereon. The third layer 3A is arranged on a second surface side opposite to the first surface of the first layer 1A to be layered thereon. The first layer 1A is arranged between the second layer 2A and the third layer 3A to be sandwiched therebetween. The interlayer film 11A is used for obtaining laminated glass. The interlayer film 11A is an interlayer film for laminated glass. The interlayer film 11A is a multilayer interlayer film.

The interlayer film 11A has one end 11a and the other end 11b at the opposite side of the one end 11a. The one end 11a and the other end 11b are end parts of both sides facing each other. The sectional shapes in the thickness direction of the first layer 1A and the second layer 2A are rectangular shapes. With respect to the thickness of the third layer 3A, the thickness at the other end 11b side is larger than the thickness at the one end 11a side. The third layer 31A has a portion having a rectangular sectional shape in the thickness direction, and a portion having a wedge-like sectional shape in the thickness direction. The thickness of the other end 11b of the interlayer film 11A is larger than the thickness of the one end 11a thereof. Accordingly, the interlayer film 11A has a region being thin in thickness and a region being thick in thickness.

The interlayer film 11A has a portion 11Aa having a rectangular sectional shape in the thickness direction, and a portion 11Ab having a wedge-like sectional shape in the thickness direction.

The interlayer film 11A has a region for display R1 corresponding to a display region of a head-up display. The interlayer film 11A has a peripheral region R2 neighboring the region for display R1.

The interlayer film 11A has a shading region R3 that is separate from the region for display R1. The shading region R3 is located in an edge portion of the interlayer film 11A.

It is preferred that the interlayer film have a portion with a sectional shape in the thickness direction of a wedge-like shape. It is preferred that the interlayer film have a portion where the thickness gradually increases from one end toward the other end. It is preferred that the sectional shape in the thickness direction of the interlayer film be a wedge-like shape. Examples of the sectional shape in the thickness direction of the interlayer film include a trapezoidal shape, a triangular shape, a pentagonal shape, and the like.

In order to suppress double images, the wedge angle θ of the interlayer film can be appropriately set according to the fitting angle of laminated glass. From the viewpoint of further suppressing double images, the wedge angle θ of the interlayer film is preferably 0.2 mrad (0.0115 degree) or more. When the wedge angle θ is the above lower limit or more, it is possible to obtain laminated glass suited for cars such as a truck or a bus in which the attachment angle of the windshield is large.

From the viewpoint of further suppressing double images, the wedge angle θ of the interlayer film is 0.7 mrad (0.0401 degrees) or less, preferably 0.5 mrad (0.0288 degrees) or less, especially preferably 0.47 mrad (0.027 degrees) or less. When the wedge angle θ is the above upper limit or less, it is possible to obtain laminated glass suited for cars such as a sports car in which the attachment angle of the windshield is small.

The wedge angle θ of the interlayer film is an interior angle formed at the intersection point between a straight line connecting a point on the first surface (one surface) of the maximum thickness part of the interlayer film and a point on the first surface of the minimum thickness part thereof and a straight line connecting a point on the second surface (the other surface) of the maximum thickness part of the interlayer film and a point on the second surface of the minimum thickness part thereof. When there are a plurality of maximum thicknesses parts, there are a plurality of minimum thicknesses parts, or the minimum thickness part is located in a certain region, the maximum thickness part and the minimum thickness part for determining the wedge angle θ are selected so that the wedge angle θ to be determined is the maximum.

From the viewpoint of further suppressing double images, further enhancing the handling property of the interlayer film, and making poor appearance of laminated glass be less likely to occur, a ratio of the thickness of the interlayer film at the one end to the thickness of the interlayer film at the other end is preferably 1.05 or more, more preferably 1.1 or more, and is preferably 1.8 or less, more preferably 1.7 or less.

The thickness of the interlayer film is not particularly limited. The thickness of the interlayer film refers to the total thickness of the respective layers constituting the interlayer film. Thus, in the case of a multi-layered interlayer film 11, the thickness of the interlayer film refers to the total thickness of the first layer 1, the second layer 2, and the third layer 3.

The minimum thickness of the interlayer film is preferably 0.1 mm or more, more preferably 0.25 mm or more, further preferably 0.5 mm or more, still further preferably 0.65 mm or more, especially preferably 0.7 mm or more, most preferably 0.725 mm or more, and is preferably 3 mm or less, more preferably 2 mm or less, further preferably 1.5 mm or less.

The maximum thickness of the interlayer film is preferably 0.1 mm or more, more preferably 0.25 mm or more, further preferably 0.5 mm or more, still further preferably 0.8 mm or more, especially preferably 0.9 mm or more and is preferably 3 mm or less, more preferably 2 mm or less, further preferably 1.5 mm or less.

The distance X between one end and the other end of the interlayer film is preferably 3 m or less, more preferably 2 m or less, especially preferably 1.5 m or less, and is preferably 0.5 m or more, more preferably 0.8 m or more, especially preferably 1 m or more.

A distance between the one end and the other end is defined as X. It is preferred that the interlayer film have a minimum thickness in the region at a distance of 0X to 0.2X inwardly from the one end, and a maximum thickness in the region at a distance of 0X to 0.2X inwardly from the other end. It is more preferred that the interlayer film have a minimum thickness in the region at a distance of 0X to 0.1X inwardly from the one end, and a maximum thickness in the region at a distance of 0X to 0.1X inwardly from the other end. It is preferred that the interlayer film have a minimum thickness at the one end and the interlayer film have a maximum thickness at the other end. The interlayer film 11, 11A has a maximum thickness at the other end 11b and a minimum thickness at the one end 11a.

The interlayer film may have a uniform-thickness part. The uniform-thickness part means that the variation in thickness does not exceed 10 µm per a distance range of 10 cm in the direction connecting the one end and the other end of the interlayer film. Therefore, the uniform-thickness part refers to the part where the variation in thickness does not exceed 10 µm per a distance range of 10 cm in the direction connecting the one end and the other end of the interlayer film. To be more specific, the uniform-thickness part refers to the part where the thickness does not vary at all in the direction connecting the one end and the other end of the interlayer film, or the thickness varies by 10 µm or less per a distance range of 10 cm in the direction connecting the one end and the other end of the interlayer film.

From the viewpoint of sufficiently enhancing the adhesive force and penetration resistance, making poor appearance of laminated glass be less likely to occur, and enhancing the sound insulating properties, the minimum thickness of each of the second layer and the third layer is preferably 0.02 mm or more, more preferably 0.1 mm or more, further preferably 0.2 mm or more, especially preferably 0.27 mm or more, most preferably 0.3 mm or more. From the viewpoint of making poor appearance of laminated glass be less likely to occur and from the viewpoint of the practicality, the minimum thickness of each of the second layer and the third layer is preferably 1 mm or less, more preferably 0.8 mm or less, further preferably 0.5 mm or less.

The maximum thickness of each of the second layer and the third layer is preferably 0.05 mm or more, more preferably **0.1** mm or more, further preferably 0.2 mm or more, still further preferably 0.3 mm or more, especially preferably 0.35 mm or more, still especially preferably 0.45 mm or more, most preferably 0.55 mm or more. When the maximum thickness of each of the second layer and the third layer is the above lower limit or more and the above upper limit or less, it is possible to sufficiently enhance the adhesive force and the penetration resistance, make poor appearance of laminated glass be less likely to occur, and enhance the sound insulating properties. From the viewpoint of the practicality, the maximum thickness of each of the second layer and the third layer is preferably 1 mm or less, more preferably 0.8 mm or less.

From the viewpoint of sufficiently enhancing the adhesive force and penetration resistance, making poor appearance of laminated glass be less likely to occur, and enhancing the sound insulating properties, the total minimum thickness of the second layer and the third layer is 0.54 mm or more, preferably 0.6 mm or more. From the viewpoint of making poor appearance of laminated glass be less likely to occur and from the viewpoint of the practicality, the total minimum thickness of the second layer and the third layer is preferably 2 mm or less, more preferably 1.6 mm or less, further preferably 1 mm or less.

The total maximum thickness of the second layer and the third layer is preferably 0.1 mm or more, more preferably 0.2 mm or more, further preferably 0.4 mm or more, still further preferably 0.6 mm or more, especially preferably 0.7 mm or more, still especially preferably 0.9 mm or more, most preferably 1.1 mm or more. When the total maximum thickness of the second layer and the third layer is the above lower limit or more and the above upper limit or less, it is possible to sufficiently enhance the adhesive force and the penetration resistance, make poor appearance of laminated glass be less likely to occur, and enhance the sound insulating properties. From the viewpoint of the practicality, the total maximum thickness of the second layer and the third layer is preferably 2 mm or less, more preferably 1.6 mm or less.

From the viewpoint of making poor appearance of laminated glass be less likely to occur and enhancing the sound insulating properties, the minimum thickness of the first layer is preferably 0.05 mm or more, more preferably 0.06 mm or more, further preferably 0.07 mm or more. From the viewpoint of making poor appearance of laminated glass be less likely to occur, the minimum thickness of the first layer is 0.3 mm or less, preferably 0.2 mm or less.

From the viewpoint of making poor appearance of laminated glass be less likely to occur and enhancing the sound insulating properties, the maximum thickness of the first layer is preferably 0.05 mm or more, more preferably 0.1 mm or more, further preferably 0.125 mm or more, especially preferably 0.15 mm or more, most preferably 0.2 mm or more. From the viewpoint of making poor appearance of laminated glass be less likely to occur, the minimum thickness of the first layer is 0.3 mm or less.

Hereinafter, the details of materials constituting interlayer films of the respective layers of a multi-layered interlayer film will be described.

### (Thermoplastic resin)

The interlayer film (the respective layers) contains a thermoplastic resin (hereinafter, sometimes described as a thermoplastic resin (0)). It is preferred that the interlayer film (the respective layers) contain a polyvinyl acetal resin (hereinafter, sometimes described as a polyvinyl acetal resin (0)) as the thermoplastic resin (0). The first layer contains a thermoplastic resin (hereinafter, sometimes described as a thermoplastic resin (1)), and it is preferred that the first layer contain a polyvinyl acetal resin (hereinafter, sometimes described as a polyvinyl acetal resin (1)) as the thermoplastic resin (1). The second layer contains a thermoplastic resin (hereinafter, sometimes described as a thermoplastic resin (2)), and it is preferred that the second layer contain a polyvinyl acetal resin (hereinafter, sometimes described as a polyvinyl acetal resin (2)) as the thermoplastic resin (2). It is preferred that the third layer contain a thermoplastic resin (hereinafter, sometimes described as a thermoplastic resin (3)) and it is preferred that the third layer contain a polyvinyl acetal resin (hereinafter, sometimes described as a polyvinyl acetal resin (3)) as the thermoplastic resin (3).

The thermoplastic resin (1), the thermoplastic resin (2), and the thermoplastic resin (3) may be the same or different from one another. For still higher sound insulating properties, it is preferred that the thermoplastic resin (1) be different from the thermoplastic resin (2) and the thermoplastic resin (3). Each of the polyvinyl acetal resin (1), the polyvinyl acetal resin (2) and the polyvinyl acetal resin (3) may be the same or different from one another. For still higher sound insulating properties, it is preferred that the polyvinyl acetal resin (1) be different from the polyvinyl acetal resin (2) and the polyvinyl acetal resin (3). One kind of each of the thermoplastic resin (0), the thermoplastic resin (1), the thermoplastic resin (2), and the thermoplastic resin (3) may be used alone and two or more kinds thereof may be used in combination. One kind of each of the polyvinyl acetal resin (0), the polyvinyl acetal resin (1), the polyvinyl acetal resin (2), and the polyvinyl acetal resin (3) may be used alone and two or more kinds thereof may be used in combination.

Examples of the thermoplastic resin include a polyvinyl acetal resin, an ethylene-vinyl acetate copolymer resin, an ethylene-acrylic acid copolymer resin, a polyurethane resin, a polyvinyl alcohol resin, a polyolefin resin, a polyvinyl acetate resin, and a polystyrene resin, and the like. Thermoplastic resins other than these may be used.

It is preferred that the thermoplastic resin be a polyvinyl acetal resin. By using a polyvinyl acetal resin and a plasticizer together, the adhesive force of the interlayer film according to the present invention to a lamination glass member or another interlayer film is further enhanced.

For example, the polyvinyl acetal resin can be obtained by acetalizing polyvinyl alcohol (PVA) with an aldehyde. It is preferred that the polyvinyl acetal resin be an acetalized product of polyvinyl alcohol. For example, the polyvinyl alcohol can be obtained by saponifying polyvinyl acetate. The saponification degree of the polyvinyl alcohol generally lies within the range of 70 to 99.9% by mole.

The average polymerization degree of the polyvinyl alcohol (PVA) is preferably 200 or more, more preferably 500 or more, even more preferably 1500 or more, further preferably 1600 or more, especially preferably 2600 or more, most preferably 2700 or more and is preferably 5000 or less, more preferably 4000 or less, further preferably 3500 or less. When the average polymerization degree is the above lower limit or more, the penetration resistance of laminated glass is further enhanced. When the average polymerization degree is the above upper limit or less, formation of an interlayer film is facilitated.

The average polymerization degree of the polyvinyl alcohol is determined by a method in accordance with JIS K6726 "Testing methods for polyvinyl alcohol".

The number of carbon atoms of the acetal group contained in the polyvinyl acetal resin is not particularly limited. The aldehyde used at the time of producing the polyvinyl acetal resin is not particularly limited. It is preferred that the number of carbon atoms of the acetal group in the polyvinyl acetal resin fall within the range of 3 to 5 and it is more preferred that the number of carbon atoms of the acetal group be 3 or 4. When the number of carbon atoms of the acetal group in the polyvinyl acetal resin is 3 or more, the glass transition temperature of the interlayer film is sufficiently lowered.

The aldehyde is not particularly limited. In general, an aldehyde with 1 to 10 carbon atoms is preferably used. Examples of the aldehyde with 1 to 10 carbon atoms include formaldehyde, acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, benzaldehyde, and the like. Propionaldehyde, n-butyraldehyde, isobutyraldehyde, n-hexylaldehyde, or n-valeraldehyde is preferred, propionaldehyde, n-butyraldehyde, or isobutyraldehyde is more preferred, and n-butyraldehyde is further preferred. One kind of the aldehyde may be used alone, and two or more kinds thereof may be used in combination.

A content of the hydroxyl group (the amount of hydroxyl groups) of the polyvinyl acetal resin (1) is preferably 17% by mole or more, more preferably 20% by mole or more, further preferably 22% by mole or more and is preferably 28% by mole or less, more preferably 27% by mole or less, further preferably 25% by mole or less, especially preferably 24% by mole or less. When the content of the hydroxyl group is the above lower limit or more, the mechanical strength of the interlayer film is further enhanced. In particular, when the content of the hydroxyl group of the polyvinyl acetal resin (1) is 20% by mole or more, the resin is high in reaction efficiency and is excellent in productivity, and moreover, when being 28% by mole or less, the sound insulating properties of laminated glass are further enhanced. Moreover, when the content of the hydroxyl group is the above upper limit or less, the flexibility of the interlayer film is enhanced and the handling of the interlayer film is facilitated.

Each of the contents of the hydroxyl group of the polyvinyl acetal resin (2) and the polyvinyl acetal resin (3) is preferably 25% by mole or more, more preferably 28% by mole or more, more preferably 30% by mole or more, still more preferably 31.5% by mole or more, further preferably 32% by mole or more, especially preferably 33% by mole or more. Each of the contents of the hydroxyl group of the polyvinyl acetal resin (2) and the polyvinyl acetal resin (3) is preferably 38% by mole or less, more preferably 37% by mole or less, further preferably 36.5% by mole or less, especially preferably 36% by mole or less. When the content of the hydroxyl group is the above lower limit or more, the adhesive force of the interlayer film is further enhanced. Moreover, when the content of the hydroxyl group is the above upper limit or less, the flexibility of the interlayer film is enhanced and the handling of the interlayer film is facilitated.

From the viewpoint of further enhancing the sound insulating properties, it is preferred that the content of the hydroxyl group of the polyvinyl acetal resin (1) be lower than the content of the hydroxyl group of the polyvinyl acetal resin (2). From the viewpoint of further enhancing the sound insulating properties, it is preferred that the content of the hydroxyl group of the polyvinyl acetal resin (1) be lower than the content of the hydroxyl group of the polyvinyl acetal resin (3). From the viewpoint of still further enhancing the sound insulating properties, the absolute value of a difference between the content of the hydroxyl group of the polyvinyl acetal resin (1) and the content of the hydroxyl group of the polyvinyl acetal resin (2) is preferably 1% by mole or more, more preferably 5% by mole or more, further preferably 9% by mole or more, especially preferably 10% by mole or more, most preferably 12% by mole or more. From the viewpoint of still further enhancing the sound insulating properties, the absolute value of a difference between the content of the hydroxyl group of the polyvinyl acetal resin (1) and the content of the hydroxyl group of the polyvinyl acetal resin (3) is preferably 1% by mole or more, more preferably 5% by mole or more, further preferably 9% by mole or more, especially preferably 10% by mole or more, most preferably 12% by mole or more. The absolute value of a difference between the content of the hydroxyl group of the polyvinyl acetal resin (1) and the content of the hydroxyl group of the polyvinyl acetal resin (2) and the absolute value of a difference between the content of the hydroxyl group of the polyvinyl acetal resin (1) and the content of the hydroxyl group of the polyvinyl acetal resin (3) are preferably 20% by mole or less.

The content of the hydroxyl group of the polyvinyl acetal resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be determined in accordance with JIS K6728 "Testing methods for polyvinyl butyral".

The acetylation degree (the amount of acetyl groups) of the polyvinyl acetal resin (1) is preferably 0.01% by mole or more, more preferably 0.1% by mole or more, even more preferably 7% by mole or more, further preferably 9% by mole or more and is preferably 30% by mole or less, more preferably 25% by mole or less, further preferably 24% by mole or less, especially preferably 20% by mole or less. When the acetylation degree is the above lower limit or more, the compatibility between the polyvinyl acetal resin and a plasticizer is enhanced. When the acetylation degree is the above upper limit or less, with regard to the interlayer film and laminated glass, the moisture resistance thereof is enhanced. In particular, when the acetylation degree of the polyvinyl acetal resin (1) is 0.1% by mole or more and is 25% by mole or less, the resulting laminated glass is excellent in penetration resistance.

The acetylation degree of each of the polyvinyl acetal resin (2) and the polyvinyl acetal resin (3) is preferably 0.01% by mole or more and more preferably 0.5% by mole or more and is preferably 10% by mole or less and more preferably 2% by mole or less. When the acetylation degree is the above lower limit or more, the compatibility between the polyvinyl acetal resin and a plasticizer is enhanced. When the acetylation degree is the above upper limit or less, with regard to the interlayer film and laminated glass, the moisture resistance thereof is enhanced.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be determined in accordance with JIS K6728 "Testing methods for polyvinyl butyral".

The acetalization degree of the polyvinyl acetal resin (1) (the butyralization degree in the case of a polyvinyl butyral resin) is preferably 47% by mole or more and more preferably 60% by mole or more and is preferably 85% by mole or less, more preferably 80% by mole or less, further preferably 75% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree of each of the polyvinyl acetal resin (2) and the polyvinyl acetal resin (3) (the butyralization degree in the case of a polyvinyl butyral resin) is preferably 55% by mole or more and more preferably 60% by mole or more and is preferably 75% by mole or less and more preferably 71% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree is a mole fraction, represented in percentage, obtained by dividing a value obtained by subtracting the amount of ethylene groups to which the hydroxyl group is bonded and the amount of ethylene groups to which the acetyl group is bonded from the total amount of ethylene groups in the main chain by the total amount of ethylene groups in the main chain.

The acetalization degree can be calculated by a method in accordance with JIS K6728 "Testing methods for polyvinyl butyral" or a method in accordance with ASTM D1396-92.

In this connection, it is preferred that the content of the hydroxyl group (the amount of hydroxyl groups), the acetalization degree (the butyralization degree) and the acetylation degree be calculated from the results determined by a method in accordance with JIS K6728 "Testing methods for polyvinyl butyral". In this context, a method in accordance with ASTM D1396-92 may be used. When the polyvinyl acetal resin is a polyvinyl butyral resin, the content of the hydroxyl group (the amount of hydroxyl groups), the acetalization degree (the butyralization degree) and the acetylation degree can be calculated from the results measured by a method in accordance with JIS K6728 "Testing methods for polyvinyl butyral".

### (Plasticizer)

From the viewpoint of further enhancing the adhesive force of an interlayer film, the interlayer film according to the present invention contains a plasticizer (hereinafter, sometimes described as a plasticizer (0)). The first layer contains a plasticizer (hereinafter, sometimes described as a plasticizer (1)). The second layer contains a plasticizer (hereinafter, sometimes described as a plasticizer (2)). It is preferred that the third layer contain a plasticizer (hereinafter, sometimes described as a plasticizer (3)). When the thermoplastic resin contained in the interlayer film is a polyvinyl acetal resin, it is especially preferred that the interlayer film (the respective layers) contain a plasticizer. It is preferred that a layer containing a polyvinyl acetal resin contain a plasticizer.

The plasticizer is not particularly limited. As the plasticizer, a conventionally known plasticizer can be used. One kind of the plasticizer may be used alone, and two or more kinds thereof may be used in combination.

Examples of the plasticizer include organic ester plasticizers such as a monobasic organic acid ester and a polybasic organic acid ester, organic phosphate plasticizers such as an organic phosphate plasticizer and an organic phosphite plasticizer, and the like. Organic ester plasticizers are preferred. It is preferred that the plasticizer be a liquid plasticizer.

Examples of the monobasic organic acid ester include, but are not particularly limited to, a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decanoic acid, and the like.

Examples of the polybasic organic acid ester include, but are not particularly limited to, an ester compound of a polybasic organic acid and an alcohol having a linear or branched structure of 4 to 8 carbon atoms. Examples of the polybasic organic acid include adipic acid, sebacic acid, azelaic acid, and the like.

Examples of the organic ester plasticizer include, but are not particularly limited to, triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. Organic ester plasticizers other than these may be used. Other adipic acid esters other than the above-described adipic acid esters may be used.

Examples of the organic phosphate plasticizer include, but are not particularly limited to, tributoxyethyl phosphate, isodecyl phenyl phosphate, triisopropyl phosphate, and the like.

It is preferred that the plasticizer be a diester plasticizer represented by the following formula (1).

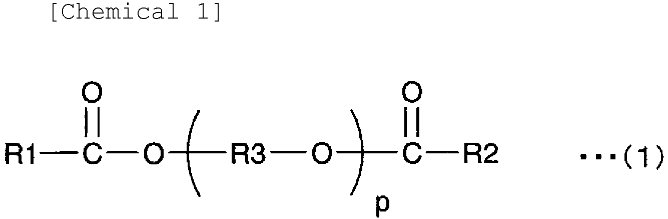

In the foregoing formula (1), R1 and R2 each represent an organic group with 5 to 10 carbon atoms, R3 represents an ethylene group, an isopropylene group, or an n-propylene group, and p represents an integer of 3 to 10. It is preferred that R1 and R2 in the foregoing formula (1) each be an organic group with 6 to 10 carbon atoms.

It is preferred that the plasticizer include triethylene glycol di-2-ethylhexanoate (3GO) or triethylene glycol di-2-ethylbutyrate (3GH), and it is more preferred that the plasticizer include triethylene glycol di-2-ethylhexanoate.

In the interlayer film, the content of the plasticizer (0) relative to 100 parts by weight of the thermoplastic resin (0) is referred to as content (0). The content (0) is preferably 25 parts by weight or more, more preferably 30 parts by weight or more, and is preferably 100 parts by weight or less, more preferably 60 parts by weight or less, further preferably 50 parts by weight or less. When the content (0) is the above lower limit or more, the penetration resistance of laminated glass is further enhanced. When the content (0) is the above upper limit or less, the transparency of the interlayer film is further enhanced.

In the first layer, the content of the plasticizer (1) relative to 100 parts by weight of the thermoplastic resin (1) is referred to as content (1). The content (1) is preferably 50 parts by weight or more, more preferably 55 parts by weight or more, further preferably 60 parts by weight or more, and is preferably 100 parts by weight or less, more preferably 90 parts by weight or less, further preferably 85 parts by weight or less, especially preferably 80 parts by weight or less. When the content (1) is the above lower limit or more, the flexibility of the interlayer film is enhanced and the handling of the interlayer film is facilitated. When the content (1) is the above upper limit or less, the penetration resistance of laminated glass is further enhanced.

In the second layer, the content of the plasticizer (2) relative to 100 parts by weight of the thermoplastic resin (2) is referred to as content (2). In the third layer, the content of the plasticizer (3) relative to 100 parts by weight of the thermoplastic resin (3) is referred to as content (3). Each of the content (2) and the content (3) is preferably 10 parts by weight or more, more preferably 15 parts by weight or more, further preferably 20 parts by weight or more, especially preferably 24 parts by weight or more, and is preferably 40 parts by weight or less, more preferably 35 parts by weight or less, further preferably 32 parts by weight or less, especially preferably 30 parts by weight or less. When the content (2) and the content (3) are the above lower limit or more, the flexibility of the interlayer film is enhanced and the handling of the interlayer film is facilitated. When the content (2) and the content (3) are the above upper limit or less, the penetration resistance of laminated glass is further enhanced.

In order to enhance the sound insulating properties of laminated glass, the content (1) is larger than the content (2). In order to further enhance the sound insulating properties of laminated glass, it is preferred that the content (1) be larger than the content (3).

From the viewpoint of further enhancing the sound insulating properties of laminated glass, each of the absolute value of the difference between the content (2) and the content (1) and the absolute value of the difference between the content (3) and the content (1) is preferably 5 parts by weight or more, more preferably 8 parts by weight or more, further preferably 10 parts by weight or more, especially preferably more than 15 parts by weight, most preferably 20 parts by weight or more. Each of the absolute value of difference between the content (2) and the content (1) and the absolute value of difference between the content (3) and the content (1) is preferably 80 parts by weight or less, more preferably 75 parts by weight or less, further preferably 70 parts by weight or less.

### (Heat shielding compound)

It is preferred that the interlayer film contain a heat shielding compound. It is preferred that the first layer contain a heat shielding compound. It is preferred that the second layer contain a heat shielding compound. It is preferred that the third layer contain a heat shielding compound. One kind of the heat shielding compound may be used alone, and two or more kinds thereof may be used in combination.

It is preferred that the heat shielding compound be constituted of at least one kind of Ingredient X among a phthalocyanine compound, a naphthalocyanine compound, and an anthracyanine compound or be constituted of heat shielding particles. In this case, the heat shielding compound may be constituted of both of the Ingredient X and the heat shielding particles.

### Ingredient X:

It is preferred that the interlayer film contain a phthalocyanine compound, a naphthalocyanine compound, or an anthracyanine compound (hereinafter, a phthalocyanine compound, a naphthalocyanine compound, and an anthracyanine compound are also called Ingredient X). It is preferred that the first layer contain the Ingredient X. It is preferred that the second layer contain the Ingredient X. It is preferred that the third layer contain the Ingredient X. The Ingredient X is a heat shielding compound. One kind of the Ingredient X may be used alone, and two or more kinds thereof may be used in combination.

The Ingredient X is not particularly limited. As the Ingredient X, conventionally known phthalocyanine compound, naphthalocyanine compound and anthracyanine compound can be used.

Examples of the Ingredient X include phthalocyanine, a derivative of phthalocyanine, naphthalocyanine, a derivative of naphthalocyanine, anthracyanine, and a derivative of anthracyanine, and the like. It is preferred that each of the phthalocyanine compound and the derivative of phthalocyanine have a phthalocyanine skeleton. It is preferred that each of the naphthalocyanine compound and the derivative of naphthalocyanine have a naphthalocyanine skeleton. It is preferred that each of the anthracyanine compound and the derivative of anthracyanine have an anthracyanine skeleton.

With regard to the interlayer film and laminated glass, from the viewpoint of further enhancing the heat shielding properties thereof, it is preferred that the Ingredient X be phthalocyanine, a derivative of phthalocyanine, naphthalocyanine or a derivative of naphthalocyanine, and it is more preferred that the Ingredient X be phthalocyanine or a derivative of phthalocyanine.

From the viewpoints of effectively enhancing the heat shielding properties and maintaining the visible light transmittance at a higher level over a long period of time, it is preferred that the Ingredient X contain vanadium atoms or copper atoms. It is preferred that the Ingredient X contain vanadium atoms and it is also preferred that the Ingredient X contain copper atoms. It is more preferred that the Ingredient X be phthalocyanine containing vanadium atoms or copper atoms or a derivative of phthalocyanine containing vanadium atoms or copper atoms. With regard to the interlayer film and laminated glass, from the viewpoint of still further enhancing the heat shielding properties thereof, it is preferred that the Ingredient X have a structural unit in which an oxygen atom is bonded to a vanadium atom.

In 100% by weight of the interlayer film or in 100% by weight of a layer containing the Ingredient X (a first layer, a second layer, or a third layer), the content of the Ingredient X is preferably 0.001% by weight or more, more preferably 0.005% by weight or more, further preferably 0.01% by weight or more, especially preferably 0.02% by weight or more. In 100% by weight of the interlayer film or in 100% by weight of a layer containing the Ingredient X (a first layer, a second layer, or a third layer), the content of the Ingredient X is preferably 0.2% by weight or less, more preferably 0.1% by weight or less, further preferably 0.05% by weight or less, especially preferably 0.04% by weight or less. When the content of the Ingredient X is the above lower limit or more and the above upper limit or less, the heat shielding properties are sufficiently enhanced and the visible light transmittance is sufficiently enhanced. For example, it is possible to make the visible light transmittance 70% or more.

### Heat shielding particles:

It is preferred that the interlayer film contain heat shielding particles. It is preferred that the first layer contain the heat shielding particles. It is preferred that the second layer contain the heat shielding particles. It is preferred that the third layer contain the heat shielding particles. The heat shielding particle is of a heat shielding compound. By the use of heat shielding particles, infrared rays (heat rays) can be effectively cut off. One kind of the heat shielding particles may be used alone, and two or more kinds thereof may be used in combination.

From the viewpoint of further enhancing the heat shielding properties of laminated glass, it is more preferred that the heat shielding particles be metal oxide particles. It is preferred that the heat shielding particle be a particle (a metal oxide particle) formed from an oxide of a metal.

The energy amount of an infrared ray with a wavelength of 780 nm or longer which is longer than that of visible light is small as compared with an ultraviolet ray. However, the thermal action of infrared rays is large, and when infrared rays are absorbed into a substance, heat is released from the substance. Accordingly, infrared rays are generally called heat rays. By the use of the heat shielding particles, infrared rays (heat rays) can be effectively cut off. In this connection, the heat shielding particle means a particle capable of absorbing infrared rays.

Specific examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, sodium-doped tungsten oxide particles, cesium-doped tungsten oxide particles, thallium-doped tungsten oxide particles, rubidium-doped tungsten oxide particles, tin-doped indium oxide particles (ITO particles), tin-doped zinc oxide particles and silicon-doped zinc oxide particles, lanthanum hexaboride (LaB₆) particles, and the like. Heat shielding particles other than these may be used. Since the heat ray shielding function is high, preferred are metal oxide particles, more preferred are ATO particles, GZO particles, IZO particles, ITO particles or tungsten oxide particles, and especially preferred are ITO particles or tungsten oxide particles. In particular, since the heat ray shielding function is high and the particles are readily available, preferred are tin-doped indium oxide particles (ITO particles), and also preferred are tungsten oxide particles.

With regard to the interlayer film and laminated glass, from the viewpoint of further enhancing the heat shielding properties thereof, it is preferred that the tungsten oxide particles be metal-doped tungsten oxide particles. Examples of the "tungsten oxide particles" include metal-doped tungsten oxide particles. Specifically, examples of the metal-doped tungsten oxide particles include sodium-doped tungsten oxide particles, cesium-doped tungsten oxide particles, thallium-doped tungsten oxide particles, rubidium-doped tungsten oxide particles, and the like.

With regard to the interlayer film and laminated glass, from the viewpoint of further enhancing the heat shielding properties thereof, cesium-doped tungsten oxide particles are especially preferred. With regard to the interlayer film and laminated glass, from the viewpoint of still further enhancing the heat shielding properties thereof, it is preferred that the cesium-doped tungsten oxide particles be tungsten oxide particles represented by the formula: Cs_{0.33}WO₃.

The average particle diameter of the heat shielding particles is preferably 0.01 µm or more, more preferably 0.02 µm or more, preferably 0.1 µm or less and more preferably 0.05 µm or less. When the average particle diameter is the above lower limit or more, the heat ray shielding properties are sufficiently enhanced. When the average particle diameter is the above upper limit or less, the dispersibility of heat shielding particles is enhanced.

The "average particle diameter" refers to the volume average particle diameter. The average particle diameter can be measured using a particle size distribution measuring apparatus ("UPA-EX150" available from NIKKISO CO., LTD.), or the like.

In 100% by weight of the interlayer film or in 100% by weight of a layer containing the heat shielding particles (a first layer, a second layer, or a third layer), the content of the heat shielding particles (in particular, the content of tungsten oxide particles) is preferably 0.01% by weight or more, more preferably 0.1% by weight or more, further preferably 1% by weight or more, especially preferably 1.5% by weight or more. In 100% by weight of the interlayer film or in 100% by weight of a layer containing the heat shielding particles (a first layer, a second layer, or a third layer), the content of the heat shielding particles (in particular, the content of tungsten oxide particles) is preferably 6% by weight or less, more preferably 5.5% by weight or less, further preferably 4% by weight or less, especially preferably 3.5% by weight or less, most preferably 3% by weight or less. When the content of the heat shielding particles is the above lower limit or more and the above upper limit or less, the heat shielding properties are sufficiently enhanced and the visible light transmittance is sufficiently enhanced.

### (Metal salt)

It is preferred that the interlayer film contain an alkali metal salt, an alkaline earth metal salt, or a magnesium salt (hereinafter, these are sometimes described as Metal salt M). It is preferred that the interlayer film contain alkali metal derived from the Metal salt M. It is preferred that the interlayer film contain alkaline earth metal derived from the Metal salt M. It is preferred that the interlayer film contain magnesium derived from the Metal salt M. It is preferred that the first layer contain the Metal salt M. It is preferred that the second layer contain the Metal salt M. It is preferred that the third layer contain the Metal salt M. By the use of the Metal salt M, controlling the adhesivity between the interlayer film and a lamination glass member such as a glass plate or the adhesivity between respective layers in the interlayer film is facilitated. One kind of the Metal salt M may be used alone, and two or more kinds thereof may be used in combination.

It is preferred that the Metal salt M contain Li, Na, K, Rb, Cs, Mg, Ca, Sr or Ba. It is preferred that the metal salt included in the interlayer film contain K or Mg.

Moreover, it is more preferred that the Metal salt M be an alkali metal salt of an organic acid with 2 to 16 carbon atoms, an alkaline earth metal salt of an organic acid with 2 to 16 carbon atoms, and a magnesium salt of an organic acid with 2 to 16 carbon atoms, and it is further preferred that the Metal salt M be a magnesium carboxylate with 2 to 16 carbon atoms or a potassium carboxylate with 2 to 16 carbon atoms.

The magnesium carboxylate with 2 to 16 carbon atoms and the potassium carboxylate with 2 to 16 carbon atoms are not particularly limited. Examples of these metal salts include magnesium acetate, potassium acetate, magnesium propionate, potassium propionate, magnesium 2-ethylbutyrate, potassium 2-ethylbutanoate, magnesium 2-ethylhexanoate, potassium 2-ethylhexanoate, and the like.

The total of the contents of Mg and K in an interlayer film containing the Metal salt M or a layer containing the Metal salt M (a first layer, a second layer, or a third layer) is preferably 5 ppm or more, more preferably 10 ppm or more, and further preferably 20 ppm or more and is preferably 300 ppm or less, more preferably 250 ppm or less, and further preferably 200 ppm or less. When the total of the contents of Mg and K is the above lower limit or more and the above upper limit or less, the adhesivity between the interlayer film and a glass plate or the adhesivity between respective layers in the interlayer film can be further well controlled.

### (Ultraviolet ray screening agent)

It is preferred that the interlayer film contain an ultraviolet ray screening agent. It is preferred that the first layer contain an ultraviolet ray screening agent. It is preferred that the second layer contain an ultraviolet ray screening agent. It is preferred that the third layer contain an ultraviolet ray screening agent. By the use of an ultraviolet ray screening agent, even when the interlayer film and the laminated glass are used for a long period of time, the visible light transmittance becomes further hard to be lowered. One kind of the ultraviolet ray screening agent may be used alone, and two or more kinds thereof may be used in combination.

Examples of the ultraviolet ray screening agent include an ultraviolet ray absorber. It is preferred that the ultraviolet ray screening agent be an ultraviolet ray absorber.

Examples of the ultraviolet ray screening agent include an ultraviolet ray screening agent containing a metal atom, an ultraviolet ray screening agent containing a metal oxide, an ultraviolet ray screening agent having a benzotriazole structure (a benzotriazole compound), an ultraviolet ray screening agent having a benzophenone structure (a benzophenone compound), an ultraviolet ray screening agent having a triazine structure (a triazine compound), an ultraviolet ray screening agent having a malonic acid ester structure (a malonic acid ester compound), an ultraviolet ray screening agent having an oxanilide structure (an oxanilide compound), an ultraviolet ray screening agent having a benzoate structure (a benzoate compound), and the like.

Examples of the ultraviolet ray screening agent containing a metal atom include platinum particles, particles in which the surface of platinum particles is coated with silica, palladium particles, particles in which the surface of palladium particles is coated with silica, and the like. It is preferred that the ultraviolet ray screening agent not be heat shielding particles.

The ultraviolet ray screening agent is preferably an ultraviolet ray screening agent having a benzotriazole structure, an ultraviolet ray screening agent having a benzophenone structure, an ultraviolet ray screening agent having a triazine structure, or an ultraviolet ray screening agent having a benzoate structure. The ultraviolet ray screening agent is more preferably an ultraviolet ray screening agent having a benzotriazole structure or an ultraviolet ray screening agent having a benzophenone structure, and is further preferably an ultraviolet ray screening agent having a benzotriazole structure.

Examples of the ultraviolet ray screening agent containing a metal oxide include zinc oxide, titanium oxide, cerium oxide, and the like. Furthermore, with regard to the ultraviolet ray screening agent containing a metal oxide, the surface thereof may be coated with any material. Examples of the coating material for the surface of the ultraviolet ray screening agent containing a metal oxide include an insulating metal oxide, a hydrolyzable organosilicon compound, a silicone compound, and the like.

Examples of the insulating metal oxide include silica, alumina, zirconia, and the like. For example, the insulating metal oxide has a band-gap energy of 5.0 eV or more.

Examples of the ultraviolet ray screening agent having a benzotriazole structure include 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriazole ("Tinuvin 326" available from BASF Japan Ltd.), 2-(2'-hydroxy-3',5'-di-amylphenyl)benzotriazole ("Tinuvin 328" available from BASF Japan Ltd.), and the like. It is preferred that the ultraviolet ray screening agent be an ultraviolet ray screening agent having a benzotriazole structure containing a halogen atom, and it is more preferred that the ultraviolet ray screening agent be an ultraviolet ray screening agent having a benzotriazole structure containing a chlorine atom, because those are excellent in ultraviolet ray absorbing performance.

Examples of the ultraviolet ray screening agent having a benzophenone structure include octabenzone ("Chimassorb 81" available from BASF Japan Ltd.), and the like.

Examples of the ultraviolet ray screening agent having a triazine structure include "LA-F70" available from ADEKA CORPORATION, 2-(4,6-diphenyl-1,3,5-triazine-2-yl)-5-[(hexyl)oxy]-phenol ("Tinuvin 1577FF" available from BASF Japan Ltd.), and the like.

Examples of the ultraviolet ray screening agent having a malonic acid ester structure include dimethyl 2-(p-methoxybenzylidene)malonate, tetraethyl-2,2-(1,4-phenylenedimethylidene)bismalonate, 2-(p-methoxybenzylidene)-bis(1,2,2,6,6-pentamethyl-4-piperidinyl)malonate, and the like.

Examples of a commercial product of the ultraviolet ray screening agent having a malonic acid ester structure include Hostavin B-CAP, Hostavin PR-25 and Hostavin PR-31 (any of these is available from Clariant Japan K.K.).

Examples of the ultraviolet ray screening agent having an oxanilide structure include a kind of oxalic acid diamide having a substituted aryl group and the like on the nitrogen atom such as N-(2-ethylphenyl)-N'-(2-ethoxy-5-t-butylphenyl)oxalic acid diamide, N-(2-ethylphenyl)-N'-(2-ethoxy-phenyl)oxalic acid diamide and 2-ethyl-2'-ethoxy-oxanilide ("Sanduvor VSU" available from Clariant Japan K.K.).

Examples of the ultraviolet ray screening agent having a benzoate structure include 2,4-di-tert-butylphenyl-3,5-di-tert-butyl-4-hydroxybenzoate ("Tinuvin 120" available from BASF Japan Ltd.), and the like.

In 100% by weight of the interlayer film or in 100% by weight of a layer containing the ultraviolet ray screening agent (a first layer, a second layer, or a third layer), the content of the ultraviolet ray screening agent and the content of the benzotriazole compound are preferably 0.1% by weight or more, more preferably 0.2% by weight or more, further preferably 0.3% by weight or more, especially preferably 0.5% by weight or more. In 100% by weight of the interlayer film or in 100% by weight of a layer containing the ultraviolet ray screening agent (a first layer, a second layer, or a third layer), the content of the ultraviolet ray screening agent and the content of the benzotriazole compound are preferably 2.5% by weight or less, more preferably 2% by weight or less, further preferably 1% by weight or less, especially preferably 0.8% by weight or less. When the content of the ultraviolet ray screening agent and the content of the benzotriazole compound are the above lower limit or more and the above upper limit or less, deterioration in visible light transmittance after a lapse of a period can be further suppressed. In particular, by setting the content of the ultraviolet ray screening agent to be 0.2% by weight or more in 100% by weight of a layer containing the ultraviolet ray screening agent, with regard to the interlayer film and laminated glass, the lowering in visible light transmittance thereof after the lapse of a certain period of time can be significantly suppressed.

### (Oxidation inhibitor)

It is preferred that the interlayer film contain an oxidation inhibitor. It is preferred that the first layer contain an oxidation inhibitor. It is preferred that the second layer contain an oxidation inhibitor. It is preferred that the third layer contain an oxidation inhibitor. One kind of the oxidation inhibitor may be used alone, and two or more kinds thereof may be used in combination.

Examples of the oxidation inhibitor include a phenol-based oxidation inhibitor, a sulfur-based oxidation inhibitor, a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butyl hydroxyanisole (BHA), 2,6-di-t-butyl-4-ethylphenol, stearyl β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, bis(3-t-butyl-4-hydroxy-5-methylbenzenepropanoic acid)ethylenebis(oxyethylene), and the like. One kind or two or more kinds among these oxidation inhibitors are preferably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-di-t-butylphenyl) phosphite, bis(2,4-di-t-butyl-6-methylphenyl)ethyl ester phosphorous acid, 2,2'-methylenebis(4,6-di-t-butyl-1-phenyloxy)(2-ethylhexyloxy) phosphorus, and the like. One kind or two or more kinds among these oxidation inhibitors are preferably used.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., "H-BHT" available from Sakai Chemical Industry Co., Ltd., "IRGANOX 1010" available from BASF Japan Ltd., and the like.

With regard to the interlayer film and laminated glass, in order to maintain high visible light transmittance thereof over a long period of time, it is preferred that the content of the oxidation inhibitor be 0.1% by weight or more in 100% by weight of the interlayer film or in 100% by weight of the layer containing the oxidation inhibitor (a first layer, a second layer or a third layer). Moreover, since an effect commensurate with the addition of an oxidation inhibitor is not attained, it is preferred that the content of the oxidation inhibitor be 2% by weight or less in 100% by weight of the interlayer film or in 100% by weight of the layer containing the oxidation inhibitor.

### (Other ingredients)

Each of the interlayer film, the first layer, the second layer, and the third layer may contain additives such as a coupling agent, a dispersing agent, a surfactant, a flame retardant, an antistatic agent, a pigment, a dye, an adhesivity adjusting agent other than metal salt, a moisture-resistance agent, a fluorescent brightening agent, and an infrared ray absorber, as necessary. One kind of these additives may be used alone, and two or more kinds thereof may be used in combination.

### (Laminated glass)

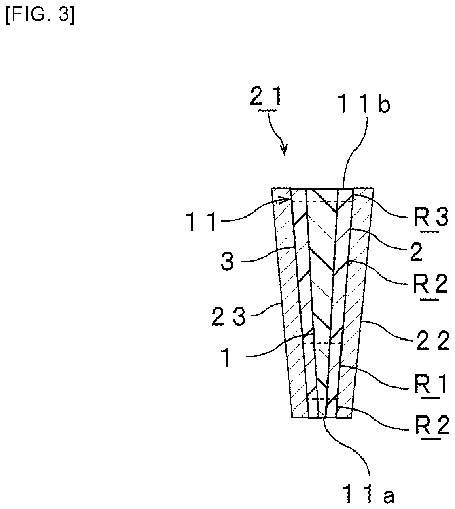

Fig. 3 is a sectional view showing an example of laminated glass prepared with the interlayer film for laminated glass shown in Fig. 1.

A laminated glass 21 shown in Fig. 3 is provided with the interlayer film 11, a first lamination glass member 22, and a second lamination glass member 23. The interlayer film 11 is arranged between the first lamination glass member 22 and the second lamination glass member 23 to be sandwiched therebetween. The first lamination glass member 22 is arranged on a first surface of the interlayer film 11. The second lamination glass member 23 is arranged on a second surface opposite to the first surface of the interlayer film 11.

Examples of the lamination glass member include a glass plate, a PET (polyethylene terephthalate) film, and the like. As the laminated glass, laminated glass in which an interlayer film is sandwiched between a glass plate and a PET film or the like, as well as laminated glass in which an interlayer film is sandwiched between two glass plates, is included. The laminated glass is a laminate provided with a glass plate, and it is preferred that at least one glass plate be used. It is preferred that each of the first lamination glass member and the second lamination glass member be a glass plate or a PET (polyethylene terephthalate) film and the interlayer film include at least one glass plate as the first lamination glass member or the second lamination glass member. It is especially preferred that both of the first lamination glass member and the second lamination glass member be glass plates.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, wired plate glass, green glass, and the like. The organic glass is synthetic resin glass substituted for inorganic glass. Examples of the organic glass include a polycarbonate plate, a poly(meth)acrylic resin plate, and the like. Examples of the poly(meth)acrylic resin plate include a polymethyl (meth)acrylate plate, and the like.

Although respective thicknesses of the first lamination glass member and the second lamination glass member are not particularly limited, the thickness is preferably 1 mm or more and is preferably 5 mm or less. When the lamination glass member is a glass plate, the thickness of the glass plate is preferably 1 mm or more and is preferably 5 mm or less. When the lamination glass member is a PET film, the thickness of the PET film is preferably 0.03 mm or more and is preferably 0.5 mm or less.

The method for producing the laminated glass is not particularly limited. For example, the interlayer film is sandwiched between the first and second lamination glass members, and then, passed through pressure rolls or subjected to decompression suction in a rubber bag. Therefore, the air remaining between the first lamination glass member and the interlayer film and between the second lamination glass member and the interlayer film is removed. Afterward, the members are preliminarily bonded together at about 70 to 110°C to obtain a laminate. Next, by putting the laminate into an autoclave or by pressing the laminate, the members are press-bonded together at about 120 to 150°C and under a pressure of 1 to 1.5 MPa. In this way, laminated glass can be obtained.

The laminated glass can be used for automobiles, railway vehicles, aircraft, ships, buildings, and the like. It is preferred that the laminated glass be laminated glass for building or for vehicles and it is more preferred that the laminated glass be laminated glass for vehicles. The laminated glass can also be used for applications other than these applications. The laminated glass can be used for a windshield, side glass, rear glass, or roof glass of an automobile, and the like. Since the laminated glass is high in heat shielding properties and is high in visible light transmittance, the laminated glass is suitably used for automobiles.

The laminated glass is a kind of laminated glass serving as a head-up display (HUD). In the laminated glass, measured information such as the speed which is sent from a control unit and the like can be projected onto the windshield from a display unit of the instrumental panel. As such, without making a driver of an automobile move his or her visual field downward, a front visual field and measured information can be visually recognized simultaneously.

Hereinafter, the present invention will be described in more detail with reference to examples. The present invention is not limited only to these examples.

The following materials were prepared.

### (Thermoplastic resin)

PVB (1) (polyvinyl acetal resin, average polymerization degree: 1700, content of hydroxyl group: 30.5% by mole, acetylation degree: 1% by mole, acetalization degree: 68.5% by mole)
PVB (2) (polyvinyl acetal resin, average polymerization degree: 2300, content of hydroxyl group: 22% by mole, acetylation degree: 13% by mole, acetalization degree: 65% by mole)
PVB (3) (polyvinyl acetal resin, content of hydroxyl group: 17% by mole, acetylation degree: 7% by mole, acetalization degree: 76% by mole)
PVB (4) (polyvinyl acetal resin, content of hydroxyl group: 23% by mole, acetylation degree: 8% by mole, acetalization degree: 69% by mole)
PVB (5) (polyvinyl acetal resin, content of hydroxyl group: 19% by mole, acetylation degree: 1% by mole, acetalization degree: 80% by mole)

In polyvinyl acetal resins used, n-butyraldehyde which has 4 carbon atoms is used for the acetalization. With regard to the polyvinyl acetal resin, the acetalization degree (the butyralization degree), the acetylation degree and the content of the hydroxyl group were measured by a method in accordance with JIS K6728 "Testing methods for polyvinyl butyral". In this connection, even in the cases of being measured according to ASTM D1396-92, numerical values similar to those obtained by a method in accordance with JIS K6728 "Testing methods for polyvinyl butyral" were exhibited.

### (Plasticizer)

3GO (triethylene glycol di-2-ethylhexanoate)

### (Ultraviolet ray screening agent)

Tinuvin 326 (2-(2'-hydroxy-3'-t-butyl-5-methylphenyl)-5-chlorobenzotriazole, available from BASF Japan Ltd.)

### (Oxidation inhibitor)

BHT (2,6-di-t-butyl-p-cresol)

### (Heat shielding compound)

ITO (ITO particles, particles of indium oxide doped with tin)
CWO (CWO particles, particles of tungsten oxide doped with cesium (Cs_{0.33}WO₃))

### (Example 1)

### Preparation of composition for forming first layer:

To 100 parts by weight of PVB (2), 60 parts by weight of 3GO, 0.2 parts by weight of Tinuvin 326, and 0.2 parts by weight of BHT were added, and sufficiently kneaded with a mixing roll to obtain a composition for forming a first layer.

Preparation of composition for forming second layer and third layer:
To 100 parts by weight of PVB (1), 38 parts by weight of 3GO, 0.2 parts by weight of Tinuvin 326, and 0.2 parts by weight of BHT were added, and sufficiently kneaded with a mixing roll to obtain a composition for forming a second layer and a third layer.

### Preparation of interlayer film:

The composition for forming the first layer, and the composition for forming the second layer and the third layer were coextruded by using a co-extruder. A wedge-like interlayer film having a multilayer structure of the second layer/the first layer/the third layer was prepared. The obtained interlayer film had a minimum thickness at one end and had a maximum thickness at the other end, and did not have a uniform-thickness part. In the obtained interlayer film, the distance X between the one end and the other end was about 1 m. When the average thickness of the interlayer film is defined as T, the average thickness of the first layer was 0.12T, and the total of the average thickness of the second layer and the average thickness of the third layer was 0.88T. The average thickness of the second layer and the average thickness of the third layer were equivalent.

### (Examples 2 to 7 and Comparative Examples 1 to 3)

A wedge-like multi-layered interlayer film was prepared in the same manner as in Example 1 except that each of the wedge angle and the thickness was set as shown in the following Table 1.

### (Example 8)

### Preparation of composition for forming first layer:

To 100 parts by weight of PVB (2), 60 parts by weight of 3GO, 0.2 parts by weight of Tinuvin 326, and 0.2 parts by weight of BHT were added, and sufficiently kneaded with a mixing roll to obtain a composition for forming a first layer.

### Preparation of composition for forming second layer and third layer:

To 100 parts by weight of PVB (1), 38 parts by weight of 3GO, ITO in an amount that gives 0.162% by weight of ITO in an obtainable second or third layer, 0.2 parts by weight of Tinuvin 326, and 0.2 parts by weight of BHT were added, and sufficiently kneaded with a mixing roll to obtain a composition for forming a second layer and a third layer.

### Preparation of interlayer film:

The composition for forming the first layer, and the composition for forming the second layer and the third layer were coextruded by using a co-extruder. A wedge-like interlayer film having a multilayer structure of the second layer/the first layer/the third layer was prepared. The obtained interlayer film had a minimum thickness at one end and had a maximum thickness at the other end, and did not have a uniform-thickness part. In the obtained interlayer film, the distance X between the one end and the other end was about 1 m. When the average thickness of the interlayer film is defined as T, the average thickness of the first layer was 0.12T, and the total of the average thickness of the second layer and the average thickness of the third layer was 0.88T. The average thickness of the second layer and the average thickness of the third layer were equivalent.

### (Examples 9 to 15, Comparative Examples 4 to 6)

A wedge-like multi-layered interlayer film was prepared in the same manner as in Example 8 except that each of the kind of polyvinyl acetal resin in the first layer, the kind and content of the heat shielding compound, the wedge angle and the thickness was set as shown in the following Table 2.

### (Example 16)

A composition for forming the first layer the same as that in Example 8, and a composition for forming the second layer and the third layer the same as that in Example 8 were prepared. These compositions were coextruded by using a co-extruder. A wedge-like interlayer film having a multilayer structure of the second layer/the first layer/the third layer was prepared. The obtained interlayer film had a minimum thickness at one end and had a maximum thickness at the other end. The obtained interlayer film had a uniform-thickness part spanning from the other end to a distance of 100 mm toward the one end, and having a uniform thickness, and the length of the uniform-thickness part was 100 mm. In the obtained interlayer film, the distance X between the one end and the other end was about 1 m. When the average thickness of the interlayer film is defined as T, the average thickness of the first layer was 0.12T, and the total of the average thickness of the second layer and the average thickness of the third layer was 0.88T. The average thickness of the second layer and the average thickness of the third layer were equivalent.

### (Examples 17 to 24)

A wedge-like multi-layered interlayer film was prepared in the same manner as in Example 16 except that each of the kind of polyvinyl acetal resin in the first layer, the kind and content of the heat shielding compound, the length of the uniform-thickness part, the wedge angle, and the thickness was set as shown in the following Table 3.

### (Evaluation)

### (1) Double images

A pair of glass plates (clear glass, the size of 510 mm × X mm (X: distance from one end to the other end of interlayer film), 2.0 mm in thickness) was prepared. An interlayer film with a size corresponding to the size of the glass plate was sandwiched between the pair of glass plates to obtain a laminate. The obtained laminate was fitted into a frame of an EPDM-made rubber tube (frame member). The rubber tube had a width of 15 **mm.** Next, the laminate fitted into a frame of an EPDM-made rubber tube was preliminarily press-bonded by a vacuum bag method. The preliminarily press-bonded laminate was subjected to press-bonding at 150°C and a pressure of 1.2 MPa with the use of an autoclave to obtain a sheet of laminated glass.

The obtained sheet of laminated glass was installed at a position of the windshield with one end of the interlayer film down. The information to be displayed, which is emitted from a display unit installed below the sheet of laminated glass, was reflected by the sheet of laminated glass to visually confirm the presence or absence of double images at a prescribed position. The double images were judged according to the following criteria.

### [Criteria for judgment in double images]

∘: Double images are not confirmed.
×: Double images are confirmed.

### (2) Uneven appearance when light comes on

For laminated glass obtained in the above (1) Evaluation of double images, a ultra-high pressure mercury lamp was placed at a distance of 1.5 m from the glass, and light was caused to come on the surface horizontal to the glass surface at an angle of 15 degrees downward of the glass. Whether or not linear or dot-like uneven appearance (distortion) was observed was evaluated.

### [Uneven appearance when light comes on]

∘∘: No linear or dot-like uneven appearance observed
∘: Linear or dot-like uneven appearance slightly observed, but practically ignorable
×: Linear or dot-like uneven appearance observed with practically unignorable degree

The details and the results of the interlayer film are shown in the following Tables 1 to 3.

**[Table 1]**

| | | | | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|---|---|---|
| Second layer | Polyvinyl acetal resin | Content of hydroxyl group | mol% | 30.5 | 30.5 | 30.5 | 30.5 | 30.5 | 30.5 | 30.5 | 30.5 | 30.5 | 30.5 |
| | | Acetylation degree | mol% | 1 | 1 | 1 | 1 | 1 | 1 | 1 | 1 | 1 | 1 |
| | | Acetalization degree | mol% | 68.5 | 68.5 | 68.5 | 68.5 | 68.5 | 68.5 | 68.5 | 68.5 | 68.5 | 68.5 |
| | | Content | Parts by weight | 100 | 100 | 100 | 100 | 100 | 100 | 100 | 100 | 100 | 100 |
| | Plasticizer | Kind | | 3GO | 3GO | 3GO | 3GO | 3GO | 3GO | 3GO | 3GO | 3GO | 3GO |
| | | Content | Parts by weight | 38 | 38 | 38 | 38 | 38 | 38 | 38 | 38 | 38 | 38 |
| First layer | Polyvinyl acetal resin | Content of hydroxyl group | mol/% | 22 | 22 | 22 | 22 | 22 | 22 | 22 | 22 | 22 | 22 |
| | | Acetylation degree | mol/% | 13 | 13 | 13 | 13 | 13 | 13 | 13 | 13 | 13 | 13 |
| | | Acetalization degree | mol/% | 65 | 65 | 65 | 65 | 65 | 65 | 65 | 65 | 65 | 65 |
| | | Content | Parts by weight | 100 | 100 | 100 | 100 | 100 | 100 | 100 | 100 | 100 | 100 |
| | Plasticizer | Kind | | 3GO | 3GO | 3GO | 3GO | 3GO | 3GO | 3GO | 3GO | 3GO | 3GO |
| | | Content | Parts by weight | 60 | 60 | 60 | 60 | 60 | 60 | 60 | 60 | 60 | 60 |
| Third layer | Polyvinyl acetal resin | Content of hydroxyl group | 3GO | 30.5 | 30.5 | 30.5 | 30.5 | 30.5 | 30.5 | 30.5 | 30.5 | 30.5 | 30.5 |
| | | Acetylation degree | mol% | 1 | 1 | 1 | 1 | 1 | 1 | 1 | 1 | 1 | 1 |
| | | Acetalization degree | mol% | 68.5 | 68.5 | 68.5 | 68.5 | 68.5 | 68.5 | 68.5 | 68.5 | 68.5 | 68.5 |
| | | Content | mol% | 100 | 100 | 100 | 100 | 100 | 100 | 100 | 100 | 100 | 100 |
| | Plasticizer | Kind | Parts by weight | 3GO | 3GO | 3GO | 3GO | 3GO | 3GO | 3GO | 3GO | 3GO | 3GO |
| | | Content | | 38 | 38 | 38 | 38 | 38 | 38 | 38 | 38 | 38 | 38 |
| Wedge angle of interlayer film | | | mrad | 0.42 | 0.24 | 0.45 | 0.30 | 0.36 | 0.68 | 0.60 | - | - | 0.42 |
| One end side | Thickness (a) of interlayer film at one end | | µm | 732.3 | 773.8 | 735.5 | 761 | 752.2 | 778.8 | 704 | 799.7 | 799.7 | 732 |
| | Thickness (a1) of first layer at one end | | µm | 75.3 | 69.7 | 80 | 71.1 | 73.4 | 107.1 | 113.9 | 112.4 | 112.4 | 100 |
| | Ratio A ((a1)/(a)) | | µm | 0.10 | 0.09 | 0.11 | 0.09 | 0.10 | 0.14 | 0.16 | 0.14 | 0.14 | 0.14 |
| Other end side | Thickness (b) of interlayer film at other end | | µm | 1148.7 | 1018.6 | 1185.5 | 1063 | 1109.7 | 1461 | 1308.7 | 810.3 | 820 | 1150 |
| | Thickness (b1) of first layer at other end | | µm | 149.4 | 127.5 | 152 | 131.3 | 136.8 | 179.6 | 176.8 | 108.4 | 130 | 300 |
| | Ratio B ((b1)/(b)) | | - | 0.13 | 0.13 | 0.13 | 0.12 | 0.12 | 0.12 | 0.14 | 0.13 | 0.16 | 0.26 |
| Ratio B/ratio A | | | - | 1.26 | 1.39 | 1.18 | 1.32 | 1.26 | 0.89 | 0.84 | 0.95 | 1.13 | 1.91 |
| Evaluation | Double images | | - | ○ | ○ | ○ | ○ | ○ | ○ | ○ | × | × | ○ |
| | Uneven appearance when light come on | | - | ○○ | ○○ | ○○ | ○○ | ○○ | ○○ | ○○ | × | × | × |

**[Table 2]**

| | | | | | Example 8 | Example 9 | Example 10 | Example 11 | Example 12 | Example 13 | Example 14 | Example 15 | Comparative Example 4 | Comparative Example 5 | Comparative Example 6 |
|---|---|---|---|---|---|---|---|---|---|---|---|---|---|---|---|
| Second layer | Polyvinyl acetal resin | | Content of hydroxyl group | mol% | 30.5 | 30.5 | 30.5 | 30.5 | 30.5 | 30.5 | 30.5 | 30.5 | 30.5 | 30.5 | 30.5 |
| | | | Acetylation degree | mol% | 1 | 1 | 1 | 1 | 1 | 1 | 1 | 1 | 1 | 1 | 1 |
| | | | Acetalization degree | mol% | 68.5 | 68.5 | 68.5 | 68.5 | 68.5 | 68.5 | 68.5 | 68.5 | 68.5 | 68.5 | 68.5 |
| | | | Content | Parts by weight | 100 | 100 | 100 | 100 | 100 | 100 | 100 | 100 | 100 | 100 | 100 |
| | Plasticizer | | Kind | | 3GO | 3GO | 3GO | 3GO | 3GO | 3GO | 3GO | 3GO | 3GO | 3GO | 3GO |
| | | | Content | Parts by weight | 38 | 38 | 38 | 38 | 38 | 38 | 38 | 38 | 38 | 38 | 38 |
| | Heat shielding compound | ITO | Content | wt% | 0.162 | 0 | 0.162 | 0 | 0.162 | 0 | 0 | 0 | 0.162 | 0.162 | 0.162 |
| | | ZWO | Content | wt% | 0 | 0.043 | 0 | 0.043 | 0 | 0.043 | 0.043 | 0.043 | 0 | 0 | 0 |
| First layer | Polyvinyl acetal resin | | Content of hydroxyl group | mol% | 22 | 17 | 22 | 23 | 22 | 22 | 19 | 22 | 22 | 22 | 22 |
| | | | Acetylation degree | mol% | 13 | 7 | 13 | 8 | 13 | 13 | 1 | 13 | 13 | 13 | 13 |
| | | | Acetalization degree | mol% | 65 | 76 | 65 | 69 | 65 | 65 | 80 | 65 | 65 | 65 | 65 |
| | | | Content | Parts by weight | 100 | 100 | 100 | 100 | 100 | 100 | 100 | 100 | 100 | 100 | 100 |
| | Plasticizer | | Kind | | 3GO | 3GO | 3GO | 3GO | 3GO | 3GO | 3GO | 3GO | 3GO | 3GO | 3GO |
| | | | Content | Parts by weight | 60 | 60 | 60 | 60 | 60 | 60 | 60 | 60 | 60 | 60 | 60 |
| Third layer | Polyvinyl acetal resin | | Content of hydroxyl group | 3GO | 30.5 | 30.5 | 30.5 | 30.5 | 30.5 | 30.5 | 30.5 | 30.5 | 30.5 | 30.5 | 30.5 |
| | | | Acetylation degree | mol% | 1 | 1 | 1 | 1 | 1 | 1 | 1 | 1 | 1 | 1 | 1 |
| | | | Acetalization degree | mol% | 68.5 | 68.5 | 68.5 | 68.5 | 68.5 | 68.5 | 68.5 | 68.5 | 68.5 | 68.5 | 68.5 |
| | | | Content | mol% | 100 | 100 | 100 | 100 | 100 | 100 | 100 | 100 | 100 | 100 | 100 |
| | Plasticizer | | Kind | Parts by weight | 3GO | 3G0 | 3GO | 3GO | 3GO | 3GO | 3GO | 3GO | 3GO | 3GO | 3GO |
| | | | Content | | 38 | 38 | 38 | 38 | 38 | 38 | 38 | 38 | 38 | 38 | 38 |
| | Heat shielding compound compound | ITO | Content | wt% | 0.162 | 0 | 0.162 | 0 | 0.162 | 0 | 0 | 0 | 0.162 | 0.162 | 0.162 |
| | | CWO | Content | wt% | 0 | 0.043 | 0 | 0.043 | 0 | 0.043 | 0.043 | 0.043 | 0 | 0 | 0 |
| Wedge angle of interlayer film | | | | mrad | 0.42 | 0.42 | 0.24 | 0.24 | 0.45 | 0.36 | 0.68 | 0.60 | - | - | 0.42 |
| One end side | Thickness (a) of interlayer film at one end | | | µm | 732.3 | 732.3 | 773.8 | 773.8 | 735.5 | 752.2 | 778. 8 | 704 | 799.7 | 799.7 | 732 |
| | Thickness (a1) of first layer at one end | | | µm | 75.3 | 75.3 | 69.7 | 69.7 | 80 | 73.4 | 107.1 | 113.9 | 112.4 | 112.4 | 100 |
| | Ratio A ((a1)/(a)) | | | µm | 0.10 | 0.10 | 0.09 | 0.09 | 0.11 | 0.10 | 0.14 | 0.16 | 0.14 | 0.14 | 0.14 |
| Other end side | Thickness (b) of interlayer film at other end | | | µm | 1148.7 | 1148.7 | 1018.6 | 1018.6 | 1185.5 | 1109.7 | 1461 | 1308.7 | 810.3 | 820 | 1150 |
| | Thickness (b1) of first layer at other end | | | µm | 149.4 | 149.4 | 127.5 | 127.5 | 152 | 136.8 | 179.6 | 176.8 | 108.4 | 130 | 300 |
| | Ratio B ((b1)/(b)) | | | - | 0.13 | 0.13 | 0.13 | 0.13 | 0.13 | 0.12 | 0.12 | 0.14 | 0.13 | 0.16 | 0.26 |
| Ratio B/ratio A | | | | - | 1.26 | 1.26 | 1.39 | 1.39 | 1.18 | 1.26 | 0.89 | 0.84 | 0.95 | 1.13 | 1. 91 |
| Evaluation | Double images | | | - | ○ | ○ | ○ | ○ | ○ | ○ | ○ | ○ | × | × | ○ |
| | Uneven appearance when light come on | | | - | ○○ | ○○ | ○○ | ○○ | ○○ | ○○ | ○○ | ○○ | × | × | × |

**[Table 3]**

| | | | | | Example 16 | Example 17 | Example 18 | Example 19 | Example 20 | Example 21 | Example 22 | Example 23 | Example 24 |
|---|---|---|---|---|---|---|---|---|---|---|---|---|---|
| Second layer | Polyvinyl acetal resin | | Content of hydroxyl group | mol% | 30.5 | 30.5 | 30.5 | 30.5 | 30.5 | 30.5 | 30.5 | 30.5 | 30.5 |
| | | | Acetylation degree | mol% | 1 | 1 | 1 | 1 | 1 | 1 | 1 | 1 | 1 |
| | | | Acetalization degree | mol% | 68.5 | 68.5 | 68.5 | 68.5 | 68.5 | 68.5 | 68.5 | 68.5 | 68.5 |
| | | | Content | Parts by weight | 100 | 100 | 100 | 100 | 100 | 100 | 100 | 100 | 100 |
| | Plasticizer | | Kind | | 3GO | 3GO | 3GO | 3GO | 3GO | 3GO | 3GO | 3GO | 3GO |
| | | | Content | Parts by weight | 38 | 38 | 38 | 38 | 38 | 38 | 38 | 38 | 38 |
| | Heat shielding compound | ITO | Content | wt% | 0.162 | 0 | 0.162 | 0 | 0.162 | 0 | 0 | 0 | 0 |
| | | CWO | Content | wt% | 0 | 0.043 | 0 | 0.043 | 0 | 0.043 | 0.043 | 0.043 | 0.043 |
| First layer | Polyvinyl acetal resin | | Content of hydroxyl group | mol% | 22 | 17 | 22 | 23 | 22 | 22 | 19 | 12 | 22 |
| | | | Acetylation degree | mol% | 13 | 7 | 13 | 8 | 13 | 13 | 1 | 13 | 13 |
| | | | Acetalization degree | mol% | 65 | 76 | 65 | 69 | 65 | 65 | 80 | 65 | 65 |
| | | | Content | Parts by weight | 100 | 100 | 100 | 100 | 100 | 100 | 100 | 100 | 100 |
| | Plasticizer | | Kind | | 3GO | 3GO | 3GO | 3GO | 3GO | 3GO | 3GO | 3GO | 3GO |
| | | | Content | Parts by weight | 60 | 60 | 60 | 60 | 60 | 60 | 60 | 60 | 60 |
| Third layer | Polyvinyl acetal resin | | Content of hydroxyl group | 3GO | 30.5 | 30.5 | 30.5 | 30.5 | 30.5 | 30.5 | 30.5 | 30.5 | 30.5 |
| | | | Acetylation degree | mol% | 1 | 1 | 1 | 1 | 1 | 1 | 1 | 1 | 1 |
| | | | Acelalizalion degree | mol% | 68.5 | 68.5 | 68.5 | 68.5 | 68.5 | 68.5 | 68.5 | 68.5 | 68.5 |
| | | | Content | mol% | 100 | 100 | 100 | 100 | 100 | 100 | 100 | 100 | 100 |
| | Plasticizer | | Kind | Parts by weight | 3GO | 3GO | 3GO | 3GO | 3GO | 3GO | 3GO | 3GO | 3GO |
| | | | Content | | 38 | 38 | 38 | 38 | 38 | 38 | 38 | 38 | 38 |
| | Heat shielding compound | ITO | Content | wt% | 0.162 | 0 | 0.162 | 0 | 0.162 | 0 | 0 | 0 | 0 |
| | | WO | Content | wt% | 0 | 0.043 | 0 | 0.043 | 0 | 0.043 | 0.043 | 0.043 | 0.043 |
| Wedge angle of interlayer film | | | | mrad | 0.46 | 0.46 | 0.35 | 0.27 | 0.50 | 0.45 | 0.85 | 0.76 | 0.67 |
| Length of uniform-thickness part | | | | mm | 100 | 100 | 300 | 100 | 100 | 200 | 200 | 200 | 100 |
| One end side | Thickness (a) of interlayer film at one end | | | µm | 732.3 | 732.3 | 773.8 | 773.8 | 735.5 | 752.2 | 778.3 | 704 | 704 |
| | Thickness (a1) of first layer at one end | | | µm | 75.3 | 75.3 | 69.7 | 69.7 | 80 | 73.4 | 107.1 | 113.9 | 113.9 |
| | Ratio A ((a1)/(a)) | | | µm | 0.10 | 0.10 | 0.09 | 0.09 | 0.11 | 0.10 | 0.14 | 0.16 | 0.16 |
| Other end side | Thickness (b) of interlayer film at other end | | | µm | 1148.7 | 1148.7 | 1018.6 | 1018.6 | 1185.5 | 1109.7 | 1461 | 1308.7 | 1308.7 |
| | Thickness (b1) of first layer at other end | | | µm | 149.4 | 149.4 | 127.5 | 127.5 | 152 | 136.8 | 179.6 | 176.8 | 176.8 |
| | Ratio B ((b1)/(b)) | | | - | 0.13 | 0.13 | 0.13 | 0.13 | 0.13 | 0.12 | 0.12 | 0.14 | 0.14 |
| Ratio B/ratio A | | | | - | 1.26 | 1.26 | 1. 39 | 1. 39 | 1.18 | 1.26 | 0.89 | 0.84 | 0.84 |
| Evaluation | Double images | | | - | ○ | ○ | ○ | ○ | ○ | ○ | ○ | ○ | ○ |
| | Uneven appearance when light come on | | | - | ○○ | ○○ | ○○ | ○○ | ○○ | ○○ | ○○ | ○○ | ○○ |

### EXPLANATION OF SYMBOLS

1, 1A: First layer
2, 2A: Second layer
3, 3A: Third layer
11, 11A: Interlayer film
11a: One end
11b: Other end
11Aa: Portion having sectional shape in thickness direction of rectangular shape
11Ab: Portion having sectional shape in thickness direction of wedge-like shape
21: Laminated glass
22: First lamination glass member
23: Second lamination glass member
R1: Region for display
R2: Peripheral region
R3: Shading region

## Claims

1. An interlayer film for laminated glass, comprising:
a first layer containing a thermoplastic resin and a plasticizer,
a second layer containing a thermoplastic resin and a plasticizer, and
a third layer containing a thermoplastic resin, wherein
the second layer is disposed on a first surface side of the first layer and the third layer is disposed on a second surface side of the first layer at the opposite side of the first surface side of the first layer,
the interlayer film has one end and the other end being at the opposite side of the one end, the other end has a thickness larger than a thickness of the one end, and the first layer has a minimum thickness of 20 µm or more,
a total minimum thickness of the second layer and the third layer is 540 µm or more,
the interlayer film has a wedge angle of 0.1 mrad or more and less than 0.7 mrad,
a ratio B of thickness of the first layer at the other end to thickness of the interlayer film at the other end is 1.1 times or more and less than 1.4 times a ratio A of thickness of the first layer at the one end to thickness of the interlayer film at the one end when the wedge angle is 0.1 mrad or more and 0.5 mrad or less, and the ratio B is 0.8 times or more and 0.95 times or less the ratio A and a minimum thickness of the first layer is 0.3 mm or less when the wedge angle is more than 0.5 mrad and less than 0.7 mrad, and
a content of the plasticizer in the first layer relative to 100 parts by weight of the thermoplastic resin in the first layer is larger than a content of the plasticizer in the second layer relative to 100 parts by weight of the thermoplastic resin in the second layer.

2. The interlayer film for laminated glass according to claim 1, wherein the wedge angle is 0.5 mrad or less.

3. The interlayer film for laminated glass according to claim 2, wherein the wedge angle is 0.47 mrad or less.

4. The interlayer film for laminated glass according to claim 1, wherein the wedge angle is more than 0.5 mrad and less than 0.7 mrad.

5. The interlayer film for laminated glass according to any one of claims 1 to 4, wherein the second layer has a minimum thickness of 270 µm or more.

6. The interlayer film for laminated glass according to any one of claims 1 to 5, having a portion with a sectional shape in a thickness direction of a wedge-like shape.

7. The interlayer film for laminated glass according to any one of claims 1 to 6, wherein
the thermoplastic resin in the first layer is a polyvinyl acetal resin, and
the thermoplastic resin in the second layer is a polyvinyl acetal resin.

8. The interlayer film for laminated glass according to claim 7, wherein a content of the hydroxyl group of the polyvinyl acetal resin in the first layer is lower than a content of the hydroxyl group of the polyvinyl acetal resin in the second layer.

9. The interlayer film for laminated glass according to any one of claims 1 to 8, wherein
the thermoplastic resin in the first layer is a polyvinyl acetal resin,
the thermoplastic resin in the third layer is a polyvinyl acetal resin,
the third layer contains a plasticizer,
a content of the hydroxyl group of the polyvinyl acetal resin in the first layer is lower than a content of the hydroxyl group of the polyvinyl acetal resin in the third layer, and
a content of the plasticizer in the first layer relative to 100 parts by weight of the polyvinyl acetal resin in the first layer is larger than a content of the plasticizer in the third layer relative to 100 parts by weight of the polyvinyl acetal resin in the third layer.

10. The interlayer film for laminated glass according to any one of claims 1 to 9, that is an interlayer film used for laminated glass serving as a head-up display.

11. A laminated glass, comprising:
a first lamination glass member;
a second lamination glass member; and
the interlayer film for laminated glass according to any one of claims 1 to 10,
the interlayer film for laminated glass being arranged between the first lamination glass member and the second lamination glass member.

## Patentansprüche

1. Zwischenschichtfolie für Verbundglas, umfassend:
eine erste Schicht, die ein thermoplastisches Harz und einen Weichmacher enthält, eine zweite Schicht, die ein thermoplastisches Harz und einen Weichmacher enthält, und
eine dritte Schicht, die ein thermoplastisches Harz enthält,
wobei
die zweite Schicht auf einer ersten Oberflächenseite der ersten Schicht angeordnet ist und die dritte Schicht auf einer zweiten Oberflächenseite der ersten Schicht auf der der ersten Oberflächenseite der ersten Schicht gegenüberliegenden Seite angeordnet ist,
die Zwischenschichtfolie ein Ende aufweist und das andere Ende auf der der einen Seite gegenüberliegenden Seite liegt, wobei das andere Ende eine Dicke aufweist, die größer ist als die Dicke der einen Seite, und die erste Schicht eine Mindestdicke von 20 µm oder mehr aufweist,
die gesamte Mindestdicke der zweiten Schicht und der dritten Schicht 540 µm oder mehr beträgt,
die Zwischenschichtfolie einen Keilwinkel von 0,1 mrad oder mehr und weniger als 0,7 mrad aufweist,
das Verhältnis B der Dicke der ersten Schicht am anderen Ende zur Dicke der Zwischenschichtfolie am anderen Ende das 1,1-fache oder mehr und weniger als das 1,4-fache des Verhältnisses A der Dicke der ersten Schicht am einen Ende zur Dicke der Zwischenschichtfolie am einen Ende beträgt, wenn der Keilwinkel 0,1 mrad oder mehr und 0,5 mrad oder weniger beträgt, und das Verhältnis B das 0,8-fache oder mehr und das 0,95-fache oder weniger des Verhältnisses A beträgt und eine Mindestdicke der ersten Schicht 0,3 mm oder weniger beträgt, wenn der Keilwinkel mehr als 0,5 mrad und weniger als 0,7 mrad beträgt, und
der Gehalt an Weichmacher in der ersten Schicht, bezogen auf 100 Gewichtsteile des thermoplastischen Harzes in der ersten Schicht, größer ist als der Gehalt an Weichmacher in der zweiten Schicht, bezogen auf 100 Gewichtsteile des thermoplastischen Harzes in der zweiten Schicht.

2. Zwischenschichtfolie für Verbundglas gemäß Anspruch 1, wobei der Keilwinkel 0,5 mrad oder weniger beträgt.

3. Zwischenschichtfolie für Verbundglas gemäß Anspruch 2, wobei der Keilwinkel 0,47 mrad oder weniger beträgt.

4. Zwischenschichtfolie für Verbundglas gemäß Anspruch 1, wobei der Keilwinkel mehr als 0,5 mrad und weniger als 0,7 mrad beträgt.

5. Zwischenschichtfolie für Verbundglas gemäß einem der Ansprüche 1 bis 4, wobei die zweite Schicht eine Mindestdicke von 270 µm oder mehr aufweist.

6. Zwischenschichtfolie für Verbundglas gemäß einem der Ansprüche 1 bis 5, die einen Abschnitt mit einer Querschnittsform in Dickenrichtung aufweist, die keilförmig ist.

7. Zwischenschichtfolie für Verbundglas gemäß einem der Ansprüche 1 bis 6, wobei das thermoplastische Harz in der ersten Schicht ein Polyvinylacetalharz ist und das thermoplastische Harz in der zweiten Schicht ein Polyvinylacetalharz ist.

8. Zwischenschichtfolie für Verbundglas gemäß Anspruch 7, wobei der Gehalt an Hydroxylgruppen des Polyvinylacetalharzes in der ersten Schicht geringer ist als der Gehalt an Hydroxylgruppen des Polyvinylacetalharzes in der zweiten Schicht.

9. Zwischenschichtfolie für Verbundglas gemäß einem der Ansprüche 1 bis 8, wobei das thermoplastische Harz in der ersten Schicht ein Polyvinylacetalharz ist,
das thermoplastische Harz in der dritten Schicht ein Polyvinylacetalharz ist,
die dritte Schicht einen Weichmacher enthält,
der Gehalt an Hydroxylgruppen des Polyvinylacetalharzes in der ersten Schicht geringer ist als der Gehalt an Hydroxylgruppen des Polyvinylacetalharzes in der dritten Schicht, und
der Gehalt des Weichmachers in der ersten Schicht, bezogen auf 100 Gewichtsteile des Polyvinylacetalharzes in der ersten Schicht, größer ist als der Gehalt des Weichmachers in der dritten Schicht, bezogen auf 100 Gewichtsteile des Polyvinylacetalharzes in der dritten Schicht.

10. Zwischenschichtfolie für Verbundglas gemäß einem der Ansprüche 1 bis 9, bei der es sich um eine Zwischenschichtfolie handelt, die für Verbundglas verwendet wird, das als Head-up-Display dient.

11. Verbundglas, umfassend:
ein erstes Verbundglaselement;
ein zweites Verbundglaselement; und
die Zwischenschichtfolie für Verbundglas gemäß einem der Ansprüche 1 bis 10,
wobei die Zwischenschichtfolie für Verbundglas zwischen dem ersten Verbundglaselement und dem zweiten Verbundglaselement angeordnet ist.

## Revendications

1. Film intercouche pour verre feuilleté, comportant :
une première couche contenant une résine thermoplastique et un plastifiant,
une deuxième couche contenant une résine thermoplastique et un plastifiant, et
une troisième couche contenant une résine thermoplastique,
dans lequel
la deuxième couche est disposée sur un premier côté de surface de la première couche et la troisième couche est disposée sur un second côté de surface de la première couche du côté opposé au premier côté de surface de la première couche,
le film intercouche a une première extrémité et la seconde extrémité étant du côté opposé à la première extrémité, la seconde extrémité a une épaisseur supérieure à l'épaisseur de la première extrémité, et la première couche a une épaisseur minimale de 20 µm ou plus,
une épaisseur minimale totale de la deuxième couche et de la troisième couche est de 540 mm ou plus,
le film intercouche a un angle de coin de 0,1 mrad ou plus et inférieur à 0,7 mrad,
un rapport B d'une épaisseur de la première couche à la seconde extrémité sur une épaisseur du film intercouche à la seconde extrémité est de 1,1 fois ou plus et inférieur à 1,4 fois un rapport A d'une épaisseur de la première couche à la première extrémité sur une épaisseur du film intercouche à la première extrémité lorsque l'angle de coin est de 0,1 mrad ou plus et de 0,5 mrad ou moins, et le rapport B est de 0,8 fois ou plus et de 0,95 fois ou moins le rapport A et une épaisseur minimale de la première couche est de 0,3 mm ou moins lorsque l'angle de coin est supérieur à 0,5 mrad et inférieur à 0,7 mrad, et
une teneur en plastifiant dans la première couche par rapport à 100 parties en poids de la résine thermoplastique dans la première couche est supérieure à une teneur en plastifiant dans la deuxième couche par rapport à 100 parties en poids de la résine thermoplastique dans la deuxième couche.

2. Film intercouche pour verre feuilleté selon la revendication 1, dans lequel l'angle de coin est de 0,5 mrad ou moins.

3. Film intercouche pour verre feuilleté selon la revendication 2, dans lequel l'angle de coin est de 0,47 mrad ou moins.

4. Film intercouche pour verre feuilleté selon la revendication 1, dans lequel l'angle de coin est supérieur à 0,5 mrad et inférieur à 0,7 mrad.

5. Film intercouche pour verre feuilleté selon l'une quelconque des revendications 1 à 4, dans lequel la deuxième couche a une épaisseur minimale de 270 µm ou plus.

6. Film intercouche pour verre feuilleté selon l'une quelconque des revendications 1 à 5, ayant une partie avec une forme de section dans une direction d'épaisseur d'une forme analogue à un coin.

7. Film intercouche pour verre feuilleté selon l'une quelconque des revendications 1 à 6, dans lequel
la résine thermoplastique dans la première couche est une résine de polyacétal de vinyle, et
la résine thermoplastique dans la deuxième couche est une résine de polyacétal de vinyle.

8. Film intercouche pour verre feuilleté selon la revendication 7, dans lequel une teneur en groupe hydroxyle de la résine de polyacétal de vinyle dans la première couche est inférieure à une teneur en groupe hydroxyle de la résine de polyacétal de vinyle dans la deuxième couche.

9. Film intercouche pour verre feuilleté selon l'une quelconque des revendications 1 à 8, dans lequel
la résine thermoplastique dans la première couche est une résine de polyacétal de vinyle,
la résine thermoplastique dans la troisième couche est une résine de polyacétal de vinyle,
la troisième couche contient un plastifiant,
une teneur en groupe hydroxyle de la résine de polyacétal de vinyle dans la première couche est inférieure à une teneur en groupe hydroxyle de la résine de polyacétal de vinyle dans la troisième couche, et
une teneur en plastifiant dans la première couche par rapport à 100 parties en poids de la résine de polyacétal de vinyle dans la première couche est supérieure à une teneur en plastifiant dans la troisième couche par rapport à 100 parties en poids de la résine de polyacétal de vinyle dans la troisième couche.

10. Film intercouche pour verre feuilleté selon l'une quelconque des revendications 1 à 9, qui est un film intercouche utilisé pour du verre feuilleté servant d'affichage tête haute.

11. Verre feuilleté, comportant :
un premier élément de verre de feuilletage ;
un second élément de verre de feuilletage ; et
le film intercouche pour verre feuilleté selon l'une quelconque des revendications 1 à 10,
le film intercouche pour verre feuilleté étant disposé entre le premier élément de verre de feuilletage et le second élément de verre de feuilletage.
